(19) Europäisches Patentamt
European Patent Office
Office européen des brevets

(11) **EP 1 959 127 B1**

(12) **EUROPÄISCHE PATENTSCHRIFT**

(45) Veröffentlichungstag und Bekanntmachung des Hinweises auf die Patenterteilung:
**29.06.2016   Patentblatt 2016/26**

(21) Anmeldenummer: **08002516.6**

(22) Anmeldetag: **12.02.2008**

(51) Int Cl.:
*F03B 11/00* (2006.01)        *F03D 80/00* (2016.01)
*F03D 7/04* (2006.01)         *F03D 7/02* (2006.01)
*F03B 15/00* (2006.01)

(54) **Verfahren und Vorrichtung zur indirekten Bestimmung dynamischer Groessen einer Wind- oder Wasserkraftanlage**

Method and device for the indirect determination of dynamic measurements in a wind or water power plant

Méthode et dispositif pour la détermination indirecte des mesures dynamiques dans une centrale éolienne ou une centrale hydroélectrique

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.02.2007   DE 102007007872**

(43) Veröffentlichungstag der Anmeldung:
**20.08.2008   Patentblatt 2008/34**

(73) Patentinhaber: **Moog Unna GmbH**
**59423 Unna (DE)**

(72) Erfinder:
• **Buente, Andreas Dr.**
**33378 Rheda-Wiedenbreuck (DE)**
• **Wertz, Harald**
**59494 Soest (DE)**

(74) Vertreter: **Schmalz, Günther et al**
**Withers & Rogers LLP**
**4 More London Riverside**
**London SE1 2AU (GB)**

(56) Entgegenhaltungen:
EP-A1- 1 835 293     DE-A1- 19 739 164
US-B2- 6 940 940

**Beschreibung**

Die Erfindung betrifft eine Vorrichtung zur indirekten Bestimmung dynamischer Größen einer Wind- oder Wasserkraftanlage nach der Lehre des Patentanspruchs 1, die eine Rotorwelle, mindestens zwei Messsensoren, die mittelbar oder unmittelbar an der Rotorwelle angeordnet sind und mit der Rotorwelle rotieren, und eine Recheneinheit umfasst.

Des Weiteren betrifft die Erfindung ein Verfahren zur indirekten Bestimmung dynamischer Größen einer Wind- oder Wasserkraftanlage mit Rotorwelle nach der Lehre des Patentanspruchs 16.

Für den Betrieb von Windkraftanlagen ist die Rotordrehzahl eine außerordentlich wichtige Größe. Die korrekte Rotordrehzahl ist für die Einstellung des Arbeitspunktes mit maximaler Leistung oder optimalem Wirkungsgrad ebenso relevant, wie die Überwachung der Maximaldrehzahl, bis zu der eine mechanische Beschädigung des Rotors ausgeschlossen ist.

In Wind- oder Wasserkraftanlagen nach dem Stand der Technik werden zur Bestimmung der Rotordrehzahl Drehzahlgeber eingesetzt, die entweder direkt die Rotordrehzahl messen oder über ein mechanisches Getriebe mit der Rotorwelle gekoppelt sind. Oft wird die Drehzahl redundant gemessen, d. h., dass mindestens zwei Drehzahlgeber zum Einsatz kommen, die sich gegenseitig überwachen und somit der Betrieb bei Ausfall eines Gebers fortgesetzt werden kann. In vielen Fällen sind diese redundanten Geber nicht gleichwertig. Beispielsweise kommt häufig ein hochwertiger Geber mit vergleichsweise hoher Auflösung zum Einsatz, der auch für den Betrieb des Generators verwendet werden kann. Als redundanter Geber bietet sich dann eine einfache Impulszählung der Zähne von Getrieben oder Schrauben mit Initiatoren an. Die Impulszählung liefert jedoch keine Information über den Drehwinkel der Rotorachse und ist in vielen Fällen für eine genaue Bestimmung der Drehbeschleunigung zu ungenau.

Aus den dynamischen Größen Rotordrehzahl, Rotorbeschleunigung und Rotorwinkel lassen sich spezifische Kennwerte der Wind- oder Wasserkraftanlage ableiten. So können diese Kennwerte Aufschluss über die mechanische Belastung, die entziehbare elektrische Energie, den optimalen Ausrichtwinkel des Rotors bzw. der Rotorblätter und weitere Kenngrößen geben. Im Bereich der Rotornachführung von Windkraftanlagen wurden beispielsweise in den Offenlegungsschriften DE 197 39 162 A1 und DE 197 39 164 A1 Vorschläge unterbreitet, um zur Unterstützung der Regelvorrichtung zur Nachführung der Rotorgondel in Abhängigkeit vom Rotorwinkel den Rotorblatt-Pitch so zu verändern, dass hierdurch eine Drehung der Gondel unter geringer mechanischer Belastung durchgeführt werden kann, und/oder die Gier- oder Nickmomente auf die Unterkonstruktion verringert werden können. Für diese neuen Regelverfahren ist jedoch eine präzise Bestimmung des Rotordrehwinkels erforderlich. In diesem Zusammenhang hat die oben angesprochene Impulszählung den entscheidenden Nachteil, dass auf Grund der geringen Impulszahl die Drehzahl nur mit vergleichsweise hohen Todzeiten bestimmt werden kann. Eine zusätzliche Information über die Drehzahl ist erst nach Eintreffen einer neuen Flanke des Zahnrads erhältlich. Des Weiteren ist die Bestimmung des Rotordrehwinkels nur schwer möglich, und insbesondere der Überdrehzahlfall kann nur verzögert detektiert werden, da eine Drehwinkelbeschleunigung nicht zeitnah erfasst werden kann.

Ein weiterer Nachteil der Drehgeber des Stands der Technik liegt darin, dass sie in der Regel im ruhenden Teil der Gondel der Wind- oder Wasserkraftanlage untergebracht sind. Für die Betriebsführung und für die Generatorregelung werden die Messgrößen jedoch auch im rotierenden Teil der Gondel beispielsweise zur Ansteuerung der Pitch-Regler benötigt. Im Fall der Überdrehzahl führt der Betriebsführungsrechner eine Sicherheitsfahrt durch, indem ein entsprechender Befehl über die Schleifringe zwischen Gondel und Welle zum Pitchsystem in der Nabe abgesetzt werden muss. Hierdurch entsteht eine erhöhte Fehleranfälligkeit und durch komplexe Signalführung geht wertvolle Zeit verloren, in der die Wind- oder Wasserkraftanlage gefährdet ist.

Daneben ist es bekannt, einen Beschleunigungssensor, der in der Rotornabe oder Rotorwelle integriert ist, auszuwerten. Problematisch ist hierbei, dass in den von einem solchem Sensor gemessenen Beschleunigungskräften, die Fliehkräfte und die Gewichtskräfte überlagert sind, und dadurch entsprechend komplexe und aufwendige Filtermaßnahmen vorgenommen werden müssen, um die einzelnen Vektorbestandteile der gemessenen Beschleunigung zu separieren. Auch hier entstehen wiederum Verzögerungszeiten bei der Erfassung der dynamischen Größen Drehzahl, Drehbeschleunigung und Drehwinkel, die sich negativ auf das Steuerungsverhalten auswirken können.

Ferner sind Verfahren zur Erfassung dynamischer Größen bekannt, die aus Beschleunigungssignalen eines nach dem Ferraris-Prinzip arbeitenden Gebers und einem zusätzlichen einfachen Drehzahlgeber ein rauscharmes und todzeitarmes Drehzahlsignal gewinnen. Auf Grund der erreichbaren hohen Qualität kommen solche Verfahren beispielsweise in Werkzeugmaschinen zum Einsatz. Ferraris-Beschleunigungssensoren basieren auf der Induktion von Wirbelströmen und messen ausschließlich die relative Beschleunigung zwischen Wirbelstrommaterial und Aufnehmereinheit. Nachteilig ist in vielen Fällen ihre relativ große Baugröße und die aufwendige Auswerteelektronik. Daher lassen sich solche Verfahren nicht ohne Weiteres auf Wind- oder Wasserkraftanlagen übertragen, da die Ferraris-Sensoren nur mit großem Aufwand in der Rotorwelle zu integrieren sind und in der Welle ein notwendiges Drehgebersignal nur mit geringer Abtastrate zur Verfügung steht, da es über die Betriebsführung von der Gondel in die Welle übertragen werden muss.

Ausgehend von diesem Stand der Technik ist es die Aufgabe der vorliegenden Erfindung, eine Vorrichtung und ein Verfahren zur indirekten Bestimmung dynamischer Größen einer Windkraftanlage vorzuschlagen, die das Ziel aufweist, mit relativ geringem konstruktiven Aufwand, hoher Wartungsfreiheit, präziser Messgenauigkeit selbst bei geringen Drehzahlen, niedrigem Preis, hoher Robustheit und niedrigen Kosten die Möglichkeit eröffnet, dynamische Größen wie beispielsweise Rotordrehwinkel, Rotordrehzahl und Rotorbeschleunigung einer Wind- oder Wasserkraftanlage zu messen, und die oben genannten Nachteile des Stands der Technik zu überwinden.

Diese Aufgabe wird durch eine Vorrichtung nach der Lehre des Patentanspruchs 1 und ein Verfahren nach der Lehre des Patentanspruchs 16 gelöst.

Vorteilhafte Ausgestaltungen der Erfindung sind Gegenstand der Unteransprüche.

Die Vorrichtung zur indirekten Bestimmung dynamischer Größen ist für eine Wind- oder Wasserkraftanlage vorgesehen, die mit einer Rotorwelle, mindestens zwei Messsensoren, die mittelbar oder unmittelbar an der Rotorwelle angeordnet sind und mit der Rotorwelle rotieren, und einer Recheneinheit ausgestattet ist. Die Vorrichtung ist erfindungsgemäß dadurch gekennzeichnet, dass die Messsensoren symmetrisch um die Rotorwelle angeordnet sind und jeweils mindestens zwei Komponenten einer originären Vektorgröße Kraft und/oder Beschleunigung in einem mit der Rotorwelle rotierenden Messkoordinatensystem erfassen, und die Messsensoren zum Austausch von Daten mit der Recheneinheit verbunden sind, wobei die Recheneinheit aus den gemessenen originären Vektorgrößen mindestens eine der dynamischen Größen Drehbeschleunigung, Drehzahl oder Drehwinkel der Rotorwelle berechnet. Somit umfasst die Vorrichtung erfindungsgemäß mindestens zwei Messsensoren, die symmetrisch mittelbar oder unmittelbar an der Rotorwelle untergebracht sind. Die Messsensoren sind somit entweder unmittelbar, d.h. direkt an oder in der Rotorwelle untergebracht, oder mittelbar, d.h. durch ein sich mit der Rotorwelle drehendes Anbauteil, wie beispielsweise die Rotorflügel, mit der Rotorwelle verbunden, so dass sie sich mit der Rotorwelle drehen. Die Symmetrie bezieht sich dabei auf eine geometrische Schwerpunktssymmetrie, so dass der Schwerpunkt der Sensoranordnung mit der Achse der Rotorwelle zusammenfällt. Dies bedeutet, dass der geometrische Schwerpunkt der Messsensoren mit der Achse der Rotorwelle zusammenfällt, dass die Messsensoren denselben radialen Abstand zur Rotorachse aufweisen und dass jeder Messsensor gleiche Winkelabstände bezüglich der Rotorachse zu den jeweils benachbarten Messsensoren aufweist.

Die oben charakterisierte Symmetrie der Messsensoren spielt eine wesentliche Rolle, wie im Folgenden dargelegt wird. Die von den Sensoren gemessenen Kräfte und/oder Beschleunigungen bestehen aus verschiedenen Komponenten: der Gewichtskraft (Erdanziehungskraft), der Fliehkraft und der Rotorbeschleunigungskraft. Zur Auswertung der dynamischen Kräfte müssen diese drei Kraftkomponenten voneinander separierbar sein. Dieses wird durch eine symmetrische Anordnung erleichtert, da nur in einer symmetrischen Anordnung die vektoriellen Fliehkräfte und Rotorbeschleunigungskräfte so zusammen treffen, dass sie sich bei geeigneter Addition gegenseitig auslöschen. Diese Anordnung ermöglicht somit, die Erdanziehungskraft von den anderen beiden Kraftkomponenten zu extrahieren, so dass auf Grund der vorgegebenen Geometrie und der Kenntnis der relativen Lageposition der einzelnen Messsensoren es durch ein geeignetes Verfahren möglich ist, aus den resultierenden Kräften die gewünschten dynamischen Größen abzuleiten. Es ist des weiteren denkbar, gewisse Unsymmetrien, wie sie als Einbautoleranzen bei der Anordnung der Sensoren vorkommen, als systematische Messfehler bei der Bestimmung der dynamischen Größen zu berücksichtigen und herauszurechnen.

Da die erfindungsgemäße Vorrichtung nur indirekte Größen wie Beschleunigung oder Kräfte misst, unterliegt sie zum einen keinem nennenswerten mechanischen Verschleiß wie beispielsweise mechanische Drehzahlgeber, ist daher wartungsarm und kann mit beliebig hoher Genauigkeit die Messung der dynamischen Kräfte vornehmen. Zum anderen sind diesbezügliche Messsensoren äußerst preisgünstig erhältlich, seit langem beispielsweise aus dem Automobilbereich bekannt, und lassen sich an beliebigen Stellen an der Rotorwelle, in der Rotornabe, im Antriebssystem der Rotorblätter oder in den Rotorblättern selbst unterbringen. Die Messsensoren sind dabei im rotierenden Teil der Energieanlage angeordnet. Die Recheneinheit, die die Signale der Messsensoren empfängt, kann entweder im rotierenden Teil oder auch im feststehenden Teil der Energieanlage angeordnet sein. In ihr werden die Signale der einzelnen Messsensoren ausgewertet, und unter Ausnützung der Symmetrie der Beschleunigungs- und Fliehkräfte nimmt die Recheneinheit die Bestimmung der dynamischen Größen vor. Die Recheneinheit kann gezielte Informationen an übergeordnete Steuereinheiten übermitteln, die unter Kenntnis der dynamischen Größen eine Steuerung beispielsweise des Rotorblatt-Pitches, der Drehrichtung der Rotorwelle, der mechanischen Belastung des Rotors, der Gondelausrichtung und weiterer Größen durchführt. An dieser Stelle soll darauf hingewiesen werden, dass unter dem Begriff Steuerung auch eine Regelung der Energieanlage verstanden werden soll.

In einer bevorzugten Ausführungsform sind die Messsensoren als Beschleunigungssensoren vorgesehen. Beschleunigungssensoren sind äußerst günstig auch in Form von Halbleitersensoren erhältlich. Wichtig dabei ist, dass die Beschleunigungssensoren in mindestens zwei Dimensionen Beschleunigungskräfte messen und auswerten können, wobei die Dimensionen orthogonal zur Drehachse der Rotorwelle liegen müssen. Alternativ zur Verwendung eines mehrdimensionalen Messsensors können auch mehrere eindimensional messende Sensoren in einem Sensorarray angeordnet werden, so dass beispielsweise ein Messsensor primär die Fliehkraft, und ein weiterer Messsensor primär die Rotationsbeschleunigungskraft misst. Besonders einfach ist dabei eine Anordnung, in der die einzelnen Beschleunigungskomponenten orthogonal zueinander stehen, um eine einfache Separierbarkeit der Vektorkomponenten zu ermöglichen.

In einer alternativen Ausführungsform sind die Messsensoren als Kraftsensoren ausgebildet. Kraftsensoren unterscheiden sich dadurch von Beschleunigungssensoren, dass sie mit einer Masse verbunden sind, so dass eine einfache Umrechnung zwischen Beschleunigungswerten und Kraftwerten durch Berücksichtigung der beschleunigten Masse erfolgen kann. Ansonsten gilt für die Ausführung dieser Sensoren das oben Gesagte.

Prinzipiell ist die Anordnung der Messsensoren im rotierenden Teil der Energieanlage beliebig. In einem besonders ausgezeichneten Ausführungsform sind die Messsensoren in oder an der Rotorwelle integriert. So können beispielsweise die Messsensoren innerhalb der Gondel in der rotierenden Welle untergebracht, oder an der Nabe angeordnet sein. Somit sind die Messsensoren leicht zugänglich und können beispielsweise im Fehlerfall leicht ausgetauscht werden.

In einer weiteren Ausführungsmöglichkeit sind die Messsensoren in einem Pitch-Regler eines Rotorblattes, insbesondere im Antriebssystem des Pitch-Reglers integriert. Jedes Rotorblatt besitzt einen eigenen Pitch-Regler, der die Winkelstellung des Rotorblatts gegenüber der Längsachse des Rotorblatts bestimmt. Da die Winkelstellung des Rotorblatts eine entscheidende Größe ist, die in Abhängigkeit der dynamischen Größen gesteuert werden soll, liegt es nahe, die Messsensoren im Antriebssystem des Pitch-Reglers zu integrieren. Damit ergibt sich übrigens eine besonders vorteilhafte Anzahl von Messsensoren: Die Anzahl der Messsensoren entspricht vorteilhafterweise der Anzahl der Rotorblätter, insbesondere deshalb, da die Rotorblätter symmetrisch um die Rotorachse angeordnet sind.

Es ist weiterhin durchaus denkbar, dass die Messsensoren in den einzelnen Rotorblättern integriert sind. Dies hat insbesondere den Vorteil, dass sie in einem vorab bestimmbaren radialen Abstand von der Rotorachse untergebracht werden können. Da die Größe der auftretenden Beschleunigungen und Beschleunigungskräfte direkt mit dem radialen Abstand des Messsensors von der Rotorachse korreliert, lassen sich durch Anordnung der Messsensoren im Rotorblatt äußerst hohe Messgenauigkeiten erreichen, insbesondere wenn die Messsensoren an den Spitzen der Rotorblätter angeordnet sind.

Werden die Messsensoren innerhalb der einzelnen Rotorblätter angeordnet, so ist es durchaus denkbar, dass mehrere Messsensoren in einem einzigen Rotorblatt in verschiedenen Abständen zur Rotorachse integriert sind. Dadurch ergeben sich mehrere Gruppen symmetrisch angeordneter Messsensoren, die jeweils in verschiedenen radialen Abständen zur Rotorachse in den Rotorblättern integriert sind. Dies kann insbesondere dahingehend ausgenutzt werden, dass bei niedrigen Drehzahlen die weiter von der Rotorachse angeordneten Messsensoren zur Bestimmung der dynamischen Größen verwendet werden, und bei höheren Drehzahlen die näher an der Rotorachse angeordneten Messsensoren verwendet werden, um eine gleich bleibend hohe Güte der ermittelten dynamischen Größen zu erreichen. Des Weiteren können die verschiedenen gemessenen Werte so miteinander kombiniert werden, dass sich insgesamt eine höhere Genauigkeit der Bestimmung der dynamischen Größen ergibt, beispielsweise um systematische Messfehler auszugleichen, oder um mittels einer Fehlerrechnung eine höhere Auflösungsgenauigkeit der dynamischen Größen zu erreichen.

Die Beschleunigungssensoren stehen als preiswerte, kompakte integrierte Chips zur Verfügung, es können beispielsweise Bausteine verwendet werden, die bereits in hohen Stückzahlen im Automotive-Bereich zum Einsatz kommen. Diese Sensoren sind in Varianten erhältlich, die gleichzeitig in drei orthogonalen Achsen die translatorischen Beschleunigungen detektieren können. Aber auch Sensoren, die weniger Ebenen messen können, können erfindungsgemäß zum Einsatz kommen, indem ggf. eine größere Anzahl von Sensoren zum Einsatz kommt. Mit mindestens zwei Sensoren, die in jeweils zwei Richtungen messen können, können hochdynamisch die Fliehkräfte und Drehbeschleunigungskräfte von der Gravitationskraft getrennt werden.

Üblicherweise erfolgt die Übermittlung der Signale der Messsensoren an die Recheneinheit drahtgebunden, d. h. es sind elektrische Leitungen verlegt, die die gemessenen Größen an die Recheneinheit übermitteln. Dabei kann sich die Schwierigkeit ergeben, dass falls die Recheneinheit im stehenden Bereich der Energieanlage angeordnet ist, die Signale der rotierenden Messsensoren über Schleifringe oder andere Signalkoppelstellen, die rotierende Anlagenteile elektrisch mit ruhenden Anlageteilen verbinden, übertragen werden müssen. Hierbei kann es vorteilhaft sein, wenn die Messsensoren die Messdaten drahtlos an die Recheneinheit übermitteln. Diese drahtlose Übermittlung kann am einfachsten durch eine elektromagnetische Funkverbindung realisiert werden, jedoch sind auch andere Übertragungstechniken wie beispielsweise Infrarotübertragungs- oder Ultraschallübertragungstechniken oder Ähnliches denkbar.

Dadurch wird ein höherer Datendurchsatz und eine geringere Fehleranfälligkeit der Signalübertragung gewährleistet.

Zur Überwindung der oben genannten Probleme der Signalübertragung vom rotierenden Bereich der Energieanlage in den ruhenden Bereich, kann es vorteilhaft möglich sein, dass die Recheneinheit im rotierenden Teil der Wind- oder Wasserkraftanlage, insbesondere in oder an der Rotornabe, angeordnet ist. So bietet sich für Vorrichtungen, bei denen die erfindungsgemäße Vorrichtung die Pitch-Regelung beeinflusst, vorteilhafterweise an, die Recheneinheit ebenfalls in dem rotierenden Bereich der Energieanlage anzuordnen. Dadurch können die Messsignale direkt von den rotierenden Messsensoren an die ebenfalls rotierende Recheneinheit übermittelt werden, ohne dass eine Übermittlung der Signale vom rotierenden in den ruhenden Bereich der Energieanlage notwendig wird.

Wird die Recheneinheit im rotierenden Bereich der Anlage untergebracht, so kann diese dort an beliebigen Stellen angeordnet werden. Vorteilhaft ist es möglich, dass die Recheneinheit in einem Pitch-Regler eines Rotorblatts, insbesondere in einem Antriebssystem eines Pitch-Reglers integriert ist. Es ist zudem denkbar, dass nicht eine Recheneinheit, sondern ebenso viele Recheneinheiten wie Rotorblätter innerhalb der Vorrichtung vorgesehen sind, die redundant die Bestimmung der dynamischen Größen vornehmen. Somit ist ein völlig symmetrischer Aufbau aller Pitch-Regler denkbar, so dass jeder Messsensor jedes Rotorflügels symmetrisch seine Information an alle Pitch-Regler der Energieanlage liefert. Durch eine hohe Symmetrie der Vorrichtung lassen sich zum einen Montage- und Produktionskosten einsparen, zum anderen kann durch die hohe Redundanz der Recheneinheiten die Ausfallwahrscheinlichkeit weiter reduziert werden.

Nach der Ermittlung der dynamischen Größen können diese vorteilhaft dazu verwendet werden, die Energiegewinnungsanlage zu steuern. Dazu ist es vorteilhaft möglich, dass die Recheneinheit mit mindestens einer übergeordneten Steuereinheit der Wind- oder Wasserkraftanlage zum Austausch von Daten verbunden ist. Die übergeordnete Steuereinheit kann dazu dienen, betriebsrelevante Parameter der Energiegewinnungsanlage zu steuern. Zur Übermittlung der Daten können wiederum drahtgebundene Datenleitungen sowie drahtlose Datenverbindungen in Form von Funkverbindungen, Infrarotverbindungen oder Ähnlichem verwendet werden.

Werden die von der Recheneinheit ermittelten dynamischen Größen an eine übergeordnete Steuereinheit übermittelt, so ist es vorteilhaft möglich, dass die übergeordnete Steuereinheit in Abhängigkeit der Daten der Recheneinheit Stellgrößen wie Rotorblatt-Pitch, Gondel-Elevation oder Gondel-Azimut steuert. Insbesondere in Windkraftanlagen sind die vorgenannten Größen die betriebsbestimmenden Größen, da sie die optimale Ausrichtung des Rotors im Luftstrom vorgeben. Diese drei Größen bestimmen die primären Freiheitsgrade des Rotors und ermöglichen die optimale Energieausnutzung des Windstroms. Auf Grundlage der von der erfindungsgemäßen Vorrichtung ermittelten dynamischen Größen lässt sich somit eine optimale Energieausnutzung erreichen.

Alternativ zu und auch kombinierbar mit der oben angesprochenen Variante einer Verbindung der Recheneinheit mit einer übergeordneten Steuereinheit kann die Recheneinheit auch mit mindestens einem Pitch-Regler eines Rotorblatts zum Austausch von Daten verbunden sein. Ein primärer Betriebsparameter zur Bestimmung des dynamischen Verhaltens einer Windkraftanlage ist die Pitch-Stellung des Rotorblatts. Werden mit Hilfe der erfindungsgemäßen Vorrichtung die dynamischen Größen ermittelt, so kann unmittelbar auf Basis dieser ermittelten Größen die Pitch-Einstellung jedes Rotorblatts geändert werden. Hierzu ist es vorteilhaft möglich, dass die Recheneinheit mit mindestens einem, insbesondere aber mit allen Pitch-Reglern verbunden ist.

Die Verbindung der Recheneinheit mit dem Pitch-Regler zum Austausch von Daten kann wiederum sowohl drahtgebunden als auch drahtlos realisiert werden. Insbesondere eine drahtlose Datenverbindung zwischen Recheneinheit und übergeordneter Steuereinheit und/oder Pitch-Regler hat den Vorteil, dass eine elektrische Verbindung zwischen drehendem und ruhendem Teil der Energieanlage z.B. über Schleifringe entfällt. Hierdurch ergibt sich eine höhere Signalfrequenz, größere Zuverlässigkeit und ein niedrigerer Wartungsaufwand, als bei konventionellen mechanischen drahtgebundenen Datenverbindungen, die meist über Schleifringe realisiert werden.

Grundsätzlich verwendet die erfindungsgemäße Vorrichtung Kraft- und/oder Beschleunigungssensoren zur indirekten Messung der dynamischen Größen. Jedoch ist es durchaus denkbar, dass innerhalb der Vorrichtung mindestens ein weiterer Messsensor vorgesehen ist, der mit der Recheneinheit verbunden ist, und die dynamischen Größen direkt bzw. indirekt Wege misst. Dieser zusätzliche Messsensor kann einer der im Rahmen der Diskussion des Stands der Technik genannten Messsensoren sein, insbesondere ein mechanischer Drehzahlgeber, oder ein optoelektronischer Impulszähler. Dieser weitere Messsensor dient zum einen zur Referenzmessung beispielsweise zur Elimination von systematischen Messfehlern, und zur Erhöhung der Messgenauigkeit, zum anderen der Erhöhung der Betriebssicherheit durch Redundanz.

Die Erfindung betrifft ferner ein Verfahren zur indirekten Bestimmung dynamischer Größen einer Wind- oder Wasserkraftanlage mit Rotorwelle. Im Rahmen des erfindungsgemäßen Verfahrens werden dabei folgende Verfahrensschritte ausgeführt:

- Messung von mindestens zweier Komponenten einer originären Vektorgröße Kraft und/oder Beschleunigung in einem mit der Rotorachse rotierenden lokalen Messkoordinatensystem durch jeweils mindestens zwei symmetrisch um die Rotorachse angeordneten und mitrotierenden Messsensoren;

- Übermittlung der Messdaten an eine Recheneinheit;

- Berechnung mindestens einer der dynamischen Größen Drehbeschleunigung, Drehzahl und Drehwinkel der Rotorachse aus den originären Vektorgrößen durch die Recheneinheit.

Mit anderen Worten wird an jedem der symmetrisch angeordneten Messsensoren ein lokales Messkoordinatensystem mit mindestens zwei Dimensionen in einer Ebene orthogonal zur Rotorachse aufgespannt, innerhalb dessen die Vektorgrößen Kraft und/oder Beschleunigung gemessen werden. Diese lokalen Messkoordinatensysteme rotieren ortsfest zur Ausrichtung des Messsensors und relativ zum Rotor mit, so dass deren Basisvektoren orts- und zeitveränderlich mit dem Rotordrehwinkel in Bezug auf ein Ruhekoordinatensystem sind. Die aufgenommenen Messdaten der Messkoordinatensysteme werden an eine Recheneinheit übermittelt. Innerhalb der Recheneinheit werden unter Kenntnis der relativen Anordnung der einzelnen Messsensoren zueinander aus den originären Vektorgrößen die dynamischen Größen der Energieanlage ermittelt. Hierbei gilt es nochmals zu betonen, dass eine hohe Symmetriegenauigkeit bei der Anordnung der Messsensoren grundlegend für die Genauigkeit der zu ermittelnden dynamischen Größen ist. Nur durch eine ausreichend hohe Symmetrie der räumlichen Anordnung ist es möglich, aus den gemessenen originären Vektorgrößen die Flieh- und Drehbeschleunigungskräfte so zu überlagern, dass sie sich bei symmetrischer Anordnung der Messsensoren gegenseitig kompensieren, so dass die Gewichtskräfte herausgerechnet werden können. Da die Richtung der Gewichtskraft jedoch von vornherein bekannt ist, können mittels dieser ortsfesten Komponente die Flieh- und Beschleunigungskräfte bestimmt werden, und hieraus durch eine Vielzahl von Möglichkeiten die dynamischen Größen extrahiert werden. Es ist jedoch durchaus denkbar, gewisse Unsymmetrien der Messsensoranordnung, beispielsweise durch Fertigungstoleranzen, als systematische Messfehler in einem Korrekturverfahren zu berücksichtigen.

In einer möglichen Variante des oben vorgeschlagenen erfindungsgemäßen Verfahrens können zur Messung der dynamischen Größen mindestens zwei Gruppen symmetrisch angeordneter Messsensoren mit verschiedenen radialen Abständen herangezogen werden. Hierzu können die Vektorgrößen jeder Gruppe bei der Berechnung der dynamischen Größen berücksichtigt werden. So ist es beispielsweise möglich, mehrere Gruppen von Messsensoren mit unterschiedlichen radialen Abständen zur Rotorachse vorzusehen, um das Rauschverhalten der ermittelten Größen zu minimieren, und die Gesamtgenauigkeit zu verbessern.

Die Übermittlung der Messdaten zur Recheneinheit kann prinzipiell beliebig erfolgen und wird üblicherweise über Drahtleitungen durchgeführt. Besonders vorteilhaft ist in dem Verfahren jedoch vorgesehen, dass die Übermittlung der Messdaten zur Recheneinheit drahtlos erfolgt, um insbesondere beim Übergang vom rotierenden in den ruhenden Teil der Energieanlage eine schnelle, problemlose, wartungsfreie und sichere Übermittlung der Daten zu gewährleisten.

Des Weiteren kann es vorteilhaft sein, im Rahmen des erfindungsgemäßen Verfahrens die Messgröße mindestens eines weiteren Messsensors zu berücksichtigen, der die Messgröße direkt oder auf einem indirekten Weg bestimmt. So kann beispielsweise ein direkter Drehzahlsensor, der mechanisch mit der Rotorachse über ein Getriebe verbunden ist, die Drehzahl beispielsweise über einen Tachogenerator, Drehimpulsgeber, Hallsensor oder Ähnliches ermitteln. Das Verfahren kann diese zusätzliche Messinformation verwenden, um die Genauigkeit der indirekt ermittelten Größen zu verbessern, systembedingte Fehlerquellen zu eliminieren, oder eine erhöhte Redundanz zur Erhöhung der Betriebssicherheit auszunutzen.

Prinzipiell ist das Verfahren, mit dem die Recheneinheit aus den ermittelten Größen Kraft und/oder Beschleunigung der einzelnen Messsensoren die dynamischen Größen berechnet, beliebig. Besonders vorteilhaft erscheint jedoch folgendes Vorgehen:

An jedem Messsensor wird ein lokales, mit der Rotorachse rotierendes Messkoordinatensystem $(r, \varphi)$ festgelegt. Innerhalb dieses lokalen Messkoordinatensystems werden die originären Vektorgrößen durch zwei Basiskomponenten $\vec{F}_{r}, \vec{F}_{Q}$ im lokalen Messkoordinatensystem $(r, \varphi)$ erfasst. Des Weiteren wird ein mit der Rotorachse rotierendes Bezugskoordinatensystem $(X', Y')$ festgelegt, und die Berechnung der dynamischen Größen aus den originären Vektorgrößen umfasst folgende Schritte:

- Darstellung der originären Vektorgröße $\vec{F}$ jedes Messsensors durch mindestens zwei gemessene Basiskomponenten $\vec{F}_{r}, \vec{F}_{\varphi}$ der Vektorgröße $\vec{F}$ im lokalen mitbewegten Messkoordinatensystem $(r, \varphi)$ des Messsensors;

- Transformation der gemessenen Basiskomponenten $\vec{F}_{r}', \vec{F}_{Q}$ der Messkoordinatensysteme in das Bezugskoordinatensystem $(X', Y')$;

- Vektoraddition der gemessenen transformierten Basiskomponenten $\vec{F}_{rX'}, \vec{F}_{\varphi Y'}$ im Bezugskoordinatensystem $(X', Y')$ zur Ermittlung der Summenvektoren $\vec{F}_{X'}, \vec{F}_{Y'}$, die den Gewichtskraftvektor $\vec{F}_{g}$ bestimmen;

- Berechnung des resultierenden Vektors $\vec{F}_{res}$ durch Subtraktion des Gewichtskraftvektors $\vec{F}_{g}$ von der gemessenen originären Vektorgröße $\vec{F}$ jedes Messsensors $\vec{F}_{res} = \vec{F} - \vec{F}_{g}$;

- Darstellung des resultierenden Vektors $\vec{F}_{res}$ durch Basiskomponenten $\vec{F}_{r}, \vec{F}_{\varphi}$ des Messkoordinatensystems $(r, \varphi)$ jedes Messsensors;

- Extraktion der Radial- $\vec{F}_{rres}$ und Tangentialkomponenten $F_{\varphi res}$ der originären Vektorgröße $\vec{F}$.

In anderen Worten werden durch das in der Recheneinheit ablaufende, zumeist softwaretechnisch realisierte Messverfahren folgende Schritte durchgeführt: Es werden im Bezug auf jeden Messsensor dessen originären Vektorkomponenten in einem Messkoordinatensystem erfasst, das mit dem Rotor mitläuft, und ortsfest zum Messsensor dessen gemessene Kräfte aufzeichnet. Da die relative Lage der einzelnen Messsensoren zueinander konstruktiv bekannt ist, wird ein Bezugskoordinatensystem $(X', Y')$ insbesondere an einem der Messsensoren eingeführt, das ebenfalls rotierend mit diesem Messsensor umläuft, und die gemessenen Kraftvektoren der übrigen Messsensoren werden mittels Basistransformation in das Bezugskoordinatensystem $(X', Y')$ umgerechnet. An dieser Stelle liegen nun alle gemessenen Kraftvektoren im Bezugskoordinatensystem $(X', Y')$ vor und können mit Hilfe der Einheitsvektoren dieses Bezugskoordinatensystems dargestellt werden. Auf Grund der Symmetrie der angeordneten Messsensoren heben sich die Beschleunigungs- und Fliehkraftanteile der einzelnen Kräfte der einzelnen Messsensoren auf. Somit ergibt eine Addition der einzelnen gemessenen Kräfte der Messsensoren innerhalb des Bezugskoordinatensystems einen resultierenden Kraftvektor, der exakt in Richtung der Gewichtskraft zeigt. Dessen Größe entspricht gerade dem $n$-fachen der $n$ Messsensoren. Somit lässt sich Lage und Größe der Gewichtskraft für jeden einzelnen Messsensor ermitteln. Für jeden einzelnen Messsensor ist damit ein resultierender Vektor $\vec{F}_{res}$ bestimmbar, der durch Subtraktion der gemessenen Kraft des Messsensors $\vec{F}$ und der gerade ermittelten Gewichtskraft $\vec{F}_g$ berechnet werden kann: $\vec{F}_{res} = \vec{F} - \vec{F}_g$. Dieser resultierende Vektor $\vec{F}_{res}$ setzt sich nun ausschließlich aus zwei Komponenten zusammen: Der Fliehkraft und der Drehzahlbeschleunigungskraft. Sind beispielsweise die Messkoordinatensysteme geschickter Weise so gewählt, dass ein Basisvektor des Messkoordinatensystems in radialer Richtung $r$, d. h. in Richtung der Fliehkraft zeigt, und ein Basisvektor in tangentialer Drehrichtung, d. h. in Richtung des Drehzahlbeschleunigungsvektors $\varphi$ zeigt, so lässt sich der resultierende Kraftvektor $\vec{F}_{res}$ durch die beiden Basisvektoren des Messkoordinatensystems $\vec{F}_r$ und $\vec{F}_\varphi$ darstellen. Somit erhält man für jeden einzelnen Messsensor zwei Vektorkomponenten $\vec{F}_{rres}$ und $\vec{F}_{\varphi res}$, die Fliehkraft und Drehzahlbeschleunigung des Messsensors angeben. Im Idealfall sind $\vec{F}_{rres}$ und $\vec{F}_{\varphi res}$ jedes Messsensors betragsmäßig gleichgroß.

Sind die einzelnen Kräftekomponenten Fliehkraft und Beschleunigungskraft ermittelt, so können zur endgültigen Berechnung der dynamischen Größen die folgenden Schritte verwendet werden:

- Berechnung des Drehwinkels $\varphi$ in Bezug auf das Bezugskoordinatensystem $(X', Y')$ durch die Relation: $\varphi = \arg(\vec{F}_{\gamma'}, \vec{F}_{\chi'})$;

- Berechnung der Drehzahl und Drehbeschleunigung durch die Vorschrift $\omega = d\varphi/dt$, $\alpha = d\omega/dt$.

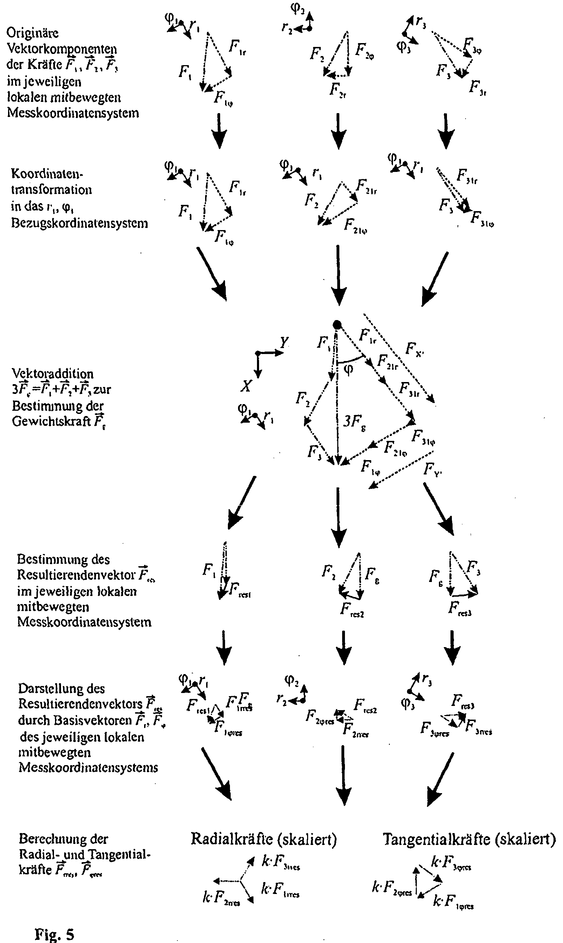

So kann beispielsweise der Drehwinkel $\varphi$ durch die Relation $\varphi = \mathrm{atan}(|\vec{F}_{\gamma'}|, |\vec{F}_{\chi'}|)$ nach der in Fig. 5 dargestellten Vektordarstellung ermittelt werden.

Der Rotorwinkel $\varphi$ ergibt sich somit durch eine Zusammensetzung der einzelnen Kraftvektoren jedes Messsensors im Bezugskoordinatensystem $(X', Y')$. Wie oben bereits angedeutet, eliminieren sich auf Grund der Symmetrie die Fliehkraft und Beschleunigungskräfte. Somit ergeben sich die zusammengesetzten Kräfte aller $n$ Messsensoren, die gerade $n$-mal der Gewichtskraft $\vec{F}_g$ entsprechen, und die in Richtung Erdmittelpunkt, d. h. in eine vorbekannte Richtung zeigen. Die einzelnen Kräfte der Messsensoren lassen sich durch Einheitsvektoren des Bezugskoordinatensystems $\vec{e}_X$, $\vec{e}_Y$ darstellen. Diese können zu Gesamtvektoren $\vec{F}_{X'}$, $\vec{F}_{Y'}$ addiert werden, deren Winkel zueinander gerade den Drehwinkel $\varphi$ bestimmen. Ausgehend vom Drehwinkel $\varphi$ ergibt sich die Drehzahl $\omega$ durch zeitliche Differentiation des Drehwinkels $\varphi$, und die Drehbeschleunigung $\alpha$ durch zeitliche Differentiation der Drehzahl $\omega$. Das Verfahren zur Berechnung der Drehzahl und der Drehbeschleunigung ist dabei beliebig, und kann beispielsweise durch numerische Differentiation zeitdiskreter Werte durchgeführt werden.

Alternativ und kombinierbar zum oben angegebenen Verfahren zur Ermittlung von Drehwinkel, Drehzahl und Drehbeschleunigung, lässt sich die Drehzahl $\omega$ auch direkt aus den Fliehkräften durch die Relation

$$\omega = \sqrt{\frac{|\vec{F}_{rres}|}{m \cdot r}}$$ bestimmen, $r$ gibt dabei den radialen Abstand des Messsensors von der Rotorachse an, und $m$ die zugrunde liegende Bezugsmasse des Kraftmesssensors. Wird die Drehzahl aus der Fliehkraftsformel bestimmt, so lassen sich beispielsweise Drehwinkel $\varphi$ durch Integration der Drehzahl $\omega$ und Drehbeschleunigung $\alpha$ durch Differentiation der Drehzahl $\omega$ bestimmen. Auch hier gilt, dass diese mathematischen Operationen beliebig, aber vorteilhaft mit Hilfe geeigneter numerischer Verfahren beispielsweise zeitdiskret durchgeführt werden können. Ebenfalls alternativ oder auch kombinierbar zu den oben angesprochenen Verfahren zur Ermittlung der dynamischen Größen lässt sich die Drehbeschleunigung $\alpha$ in Bezug auf das Bezugskoordinatensystem $(X', Y')$

durch die Relation $$\alpha = \frac{|\vec{F}_{\varphi res}|}{m \cdot r}$$ bestimmen. Ausgehend von der so ermittelten Drehbeschleunigung $\alpha$ können Drehzahl $\omega$ und Drehwinkel $\varphi$ mit Hilfe einer Integration errechnet werden. Auch hier kann wiederum jegliches beliebiges Integrationsverfahren verwendet werden, besonders vorteilhaft kann jedoch eine numerische Integration zeitdiskret abgetasteter Werte erfolgen.

Im vorangegangen Teil sind drei Möglichkeiten skizziert worden, um den Satz dreier dynamischer Größen $\varphi$, $\omega$, $\alpha$ zu ermitteln, wobei jeweils direkt eine dynamische Größe berechnet wird, und die beiden verbleibenden durch Integration oder Differentiation berechenbar sind. Besonders vorteilhaft können alle drei Verfahren parallel und unabhängig voneinander ausgeführt werden, und zum Zweck der Fehlerminimierung geeignet kombiniert werden. Dabei kann die Qualität der ermittelten dynamischen Größen durch die Berechnung des Summenvektors der ermittelten Tangential- $\vec{F}_{\varphi res}$ und/oder Radialkomponenten $\vec{F}_{rres}$ beurteilt werden. Auf Grund der Symmetrie der Tangential- und Radialkomponenten, die Fliehkraft und Drehzahlbeschleunigung angeben, sollten sich diese im Idealfall zu Null ergeben. Ein Summenvektor der ungleich Null ist, weist auf einen Fehler hin, der unter Umständen auch systembedingt ist und dadurch systematisch eliminiert werden kann.

Im Rahmen des erfindungsgemäßen Verfahrens können weiterhin vorteilhaft die ermittelten dynamischen Größen von der Recheneinheit an eine übergeordnete Steuereinheit übermittelt werden, die auf Basis der dynamischen Größen Stellgrößen wie Rotorblatt-Pitch, Gondel-Elevation oder Gondel-Azimut steuert. Somit dienen der Energiegewinnungsanlage die dynamischen Größen als Eingangsgrößen zur direkten Bestimmung grundlegender Basisgrößen zur Ausrichtung des Rotors im Wind- bzw. Wasserstrom.

Alternativ oder kombiniert zur Übermittlung der dynamischen Größen an eine übergeordnete Steuereinheit können die einzelnen dynamischen Größen auch direkt beispielsweise an den Pitch-Regler eines Rotorblatts übermittelt werden, um direkt die Pitch-Einstellung des Rotorblatts des Windrades zu verändern.

Im Obigen Teil wurden verschiedene numerische Integrations- und Differentiationsvorschriften angesprochen, deren Berechnung beliebig ausgeführt werden kann. Besonders vorteilhaft können jedoch die zur Berechnung notwendigen mathematischen Operationen, insbesondere Differentiation und/oder Integration, mittels eines iterativen numerischen Verfahrens durchgeführt werden. Dabei bietet es sich vorteilhaft an, zeitdiskrete Werte zu verwenden, und diese beispielsweise mittels gängiger numerischer Verfahren wie Zentraler Differenzquotient zur Differentiation oder Runge-Kutta Verfahren oder Ähnliches zur numerischen Integration zur Ausführung der mathematischen Operationen einzusetzen.

Ist beispielsweise in der erfindungsgemäßen Vorrichtung ein weiterer Messsensor zur direkten oder indirekten Ermittlung dynamischer Größen vorgesehen, so kann das Verfahren im Rahmen der iterativen numerischen Bestimmung der Messgrößen die Messgröße des direkt messenden Messsensors zur Korrektur der durch die indirekte Messung ermittelten dynamischen Größen benutzen. Somit kann zum einen eine erhöhte Ausfallsicherheit durch Redundanz gewährleistet werden, zum anderen die Bestimmungsgenauigkeit der dynamischen Größen mittels weiterer Messsensoren verbessert werden. So zeichnen sich insbesondere Integrationsverfahren durch fortlaufende Fehlerabweichungen aus, die geeignet durch die Messgröße des zusätzlichen Messsensors korrigiert werden können.

Die Messsensoren, die Kräfte oder Beschleunigungen messen, zeichnen vornehmlich die durch die Rotation der Rotorwelle verursachten Kraft- und Beschleunigungsveränderungen auf. Jedoch ist eine Wind- oder Wasserkraftanlage weiteren dynamischen Einflüssen, die im folgenden als sekundäre dynamischen Zustände bezeichnet werden, unterworfen, so beispielsweise dem Strömungsdruck, Windböen oder Wasserfluten. Diese plötzlichen Lastwechsel auf den Rotor der Kraftanlage führt zu Schwingungen, Biegungen oder weiteren dynamischen Veränderungen der gesamten Kraftanlage, die ihren Niederschlag ebenfalls in den Messdaten der Messsensoren finden. In einem möglichen Ausführungsbeispiel werden aus den Messdaten der Messsensoren zusätzliche Informationen über den sekundären dynamischen Zustand der Wind- oder Wasserkraftanlage, insbesondere Schwingungsverhalten, Biegeverhalten und ähnliches ermittelt. Dies kann beispielsweise durch Fourieranalyse der Messdaten erreicht werden, auch andere Analysemöglichkeiten sind denkbar, um solche Störmessgrößen aus dem ansonsten weitgehend harmonischen Verlauf der Messdaten zu extrahieren. So lassen sich aus den Messdaten sekundäre dynamische Zustände wie Biegelast, Schwingungsverhalten des Gondelturms etc analysieren. Es ist ferner denkbar, dass diese zusätzlich gewonnen Daten über den sekundären dynamischen Zustand zur Steuerung des Pitch-Systems oder der gesamten Kraftanlage verwendet werden. Zu diesem Zweck können die gewonnenen Daten über den sekundären dynamischen Zustand einer übergeordneten Steuereinheit oder den Pitch-Reglern zugeführt werden.

Im Folgenden wird die Erfindung an Hand lediglich Ausführungsbeispiele zeigender Zeichnungen näher erläutert.

Es zeigen:

Fig. 1 in schematischer Dreitafelprojektion die Anordnung der Messsensoren innerhalb einer Windkraftanlage gemäß einer Ausführungsform;

Fig. 2 in schematischer Darstellung eine weitere Anordnungsmöglichkeit von Messsensoren gemäß einer weiteren Ausführungsform;

Fig. 3 mögliche Blockschaltbilder einer Ausführungsform der Messvorrichtung;

Fig. 4 die Lage der Messkoordinatensysteme, des Bezugskoordinatensystems und eines Absolutkoordinatensystems einer Ausführungsform;

Fig. 5 Verfahrensschritte zur Bestimmung der dynamischen Größen aus den originären Vektorgrößen gemäß eines Ausführungsbeispiels der Erfindung;

Fig. 6     Anordnung der radialen und tangentialen Messkräfte einer Ausführungsform;

Fig. 7     Blockschaltbild eines numerischen Verfahrens zur Ermittlung der dynamischen Größen einer Ausführungsform.

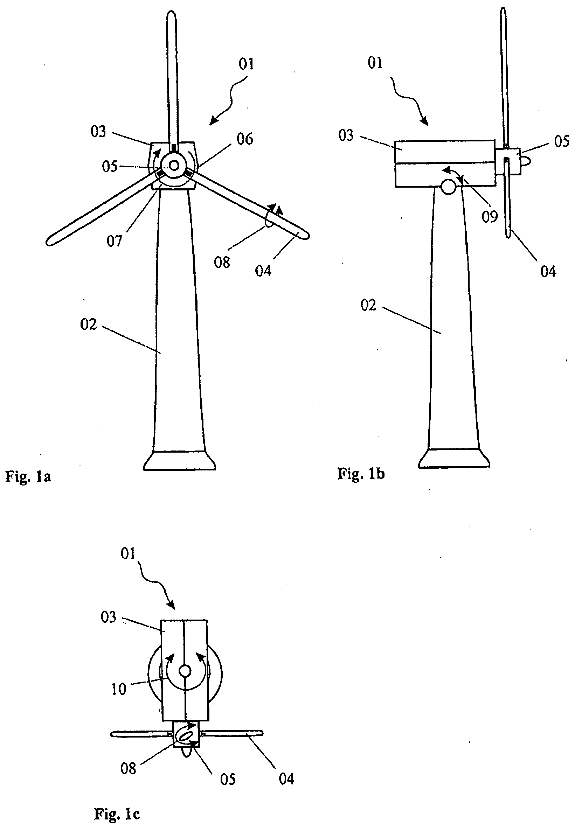

**Fig. 1** zeigt in einer schematischen Dreitafelprojektion die Anordnung von Messsensoren 06 innerhalb einer Windkraftanlage 01. Dabei zeigt **Fig. 1a** eine Vorderansicht der Windkraftanlage 01, **Fig. 1b** eine Seitenansicht, und **Fig. 1c** eine Draufsicht. Die Windkraftanlage 01 besteht aus einem Turm 02, auf dem eine Gondel 03 drehbar angeordnet ist. Diese Gondel 03 kann sich, wie mit den Bewegungspfeilen 09 und 10 dargestellt, sowohl in der horizontalen Ebene drehen (Gondel-Azimut) als auch in der vertikalen Ebene (Gondel-Elevation) bewegen, um die Rotorachse in Richtung Windstrom auszurichten. Innerhalb der Gondel 03 ist die Rotorwelle 05 gelagert. An der Nabe der Rotorwelle 05 sind drei Rotorblätter 04 angeordnet. Diese Rotorblätter 04 sind in ihrem Rotorblatt-Pitch 08 veränderbar, d. h. der Anstellwinkel (Pitch) des Rotorblatts zum Luftstrom, d. h. relativ zur Rotorblattachse, ist veränderbar. Damit sind die drei grundlegenden Freiheitsgrade der Windkraftanlage 01 definiert: Rotorblatt-Pitch 08, Gondel-Elevation 09 und Gondel-Azimut 10. In der dargestellten Anordnung sind die Messsensoren 06 in der Rotorblattwurzel, d. h. im Pitch-Regler untergebracht. Sie messen die Drehgeschwindigkeit des Rotors indirekt, indem sie die auftretenden Kräfte, die sich aus Fliehkraft, Beschleunigungskraft, und Gravitationskraft zusammensetzen, bestimmen.

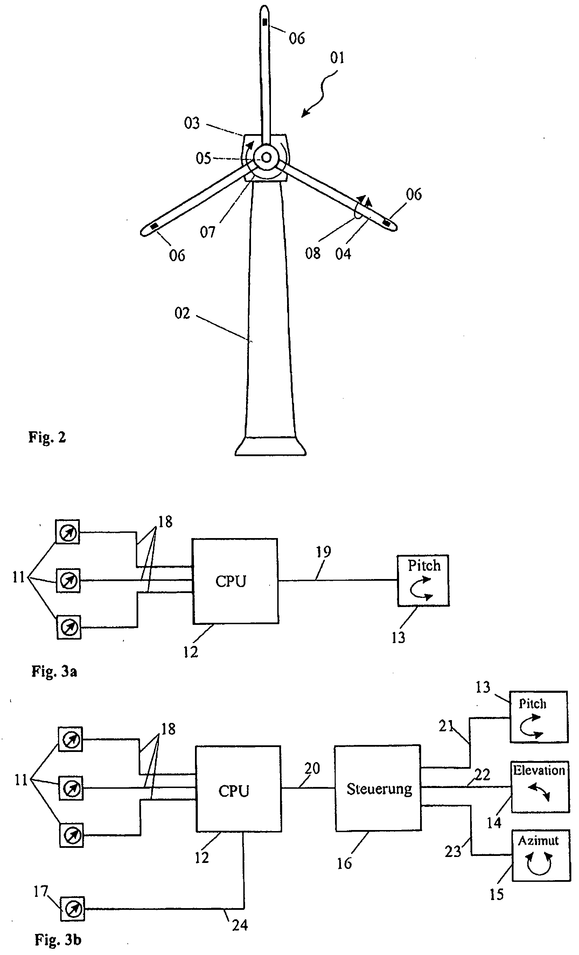

**Fig. 2** zeigt eine Windkraftanlage 01, die ebenfalls aus einem Turm 02, einer Gondel 03, einem Rotor mit Rotorachse 05 und drei Rotorblättern 04 besteht. Hierbei sind die Messsensoren 06 an den Rotorblattspitzen angebracht, so dass selbst bei geringen Drehzahlen hohe Kräfte von den Messsensoren 06 aufgenommen werden. Diese Anordnung der Messsensoren 06 mit großem radialen Abstand zur Achse der Rotorwelle 05 verbessert die Genauigkeit insbesondere bei geringen Drehzahlen, kann aber auch mit einem weiteren Satz von Messsensoren, der mit geringem radialen Abstand zur Rotorachse angeordnet ist, kombiniert werden, um beispielsweise Messfehler herauszurechnen und die Genauigkeit der zu ermittelnden dynamischen Größen zu verbessern.

Die **Fig. 3a** und **Fig. 3b** stellen Blockschaltbilder dar, die den prinzipiellen Aufbau der Vorrichtung zur Ermittlung der dynamischen Größen darstellen. In **Fig. 3a** umfasst die Vorrichtung drei Kraftsensoren 11, die mit Hilfe von Datenverbindungen 18, die Messsensor mit Recheneinheit verbinden, mit einer Recheneinheit 12 verbunden sind. Innerhalb der Recheneinheit 12 werden ausgehend von den gemessenen Kraftvektorwerten die dynamischen Größen Drehzahl, Drehbeschleunigung und Drehwinkel bestimmt, und über eine Datenverbindung 19, die die Recheneinheit mit einem Pitch-Regler 13 verbindet, an den Pitch-Regler 13 weitergegeben, der auf Basis der ermittelten dynamischen Größen den Anstellwinkel des Rotorblatts zum Luftstrom einstellt.

**Fig. 3b** zeigt ein erweitertes Ausführungsbeispiel einer Vorrichtung, die drei Kraftsensoren 11 umfasst, die mit Hilfe von drei Datenverbindungen 18 die Messsensoren mit der Recheneinheit 12 verbinden. Des Weiteren ist innerhalb der Vorrichtung ein direkt messender Sensor 17 untergebracht, den eine Datenverbindung 24 zur Übermittlung der direkt bestimmten Größen Drehzahl, Drehbeschleunigung oder Drehwinkel mit der Recheneinheit 12 verbindet. Die Recheneinheit 12 ist durch eine Datenverbindung 20 mit einer übergeordneten Steuerung 16 verbunden. Diese übergeordnete Steuerung 16 kann die drei Basisgrößen Gondel-Azimut, Gondel-Elevation und Gondel-Pitch einstellen. Sie ist mit einer Datenverbindung 21 mit dem Pitch-Regler 13, mit einer Datenverbindung 22 mit dem Elevations-Regler 14, und mit einer Datenverbindung 23 mit dem Azimut-Regler 15 verbunden. Die von den Messsensoren 11 indirekt ermittelten dynamischen Größen und die direkt ermittelte dynamische Größe, die durch den Messsensor 17 gewonnen wird, werden in der Recheneinheit 12 zusammengefasst und ausgewertet, um mit hoher Genauigkeit Drehzahl, Drehbeschleunigung und Drehwinkel zu bestimmen. Ausgehend von diesen Daten, die über die Datenverbindung 20 an die übergeordnete Steuerung 16 übermittelt werden, werden optimale Werte für Pitch, Elevation und Azimut der Gondel einer Windkraftanlage eingestellt.

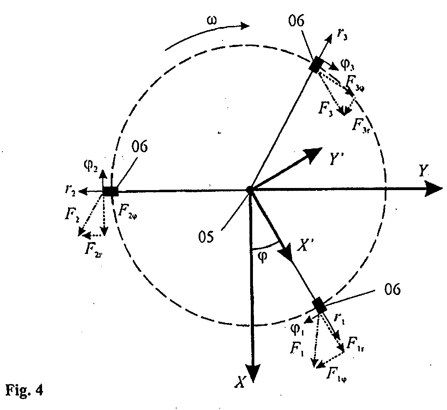

Die **Fig. 4** zeigt die dem Berechnungsverfahren zugrunde liegenden Koordinatensysteme, die zur Vektortransformation und Vektorgeometrie verwendet werden, um aus den ermittelten originären Vektorgrößen jedes einzelnen Messsensors die dynamischen Größen der Energiegewinnungsanlage zu ermitteln. In **Fig. 4** sind drei Messsensoren 06 symmetrisch zur Achse der Rotorwelle 05 angebracht. Jeder dieser Messsensoren 1, 2, 3 besitzt ein lokales Messkoordinatensystem, das jeweils die zwei Basisvektoren $r$ und $\varphi$ umfasst. Innerhalb jedes Messkoordinatensystems wird die Gesamtkraft $\vec{F}$ gemessen, die sich durch Aufspaltung in die Basisvektoren $\vec{F}_r$ und $\vec{F}_\varphi$ darstellen lässt. So wird beispielsweise beim Messsensor 3 die gemessene Größe $\vec{F}_3$ durch die radiale Größe $\vec{F}_{3r}$ und die tangentiale Größe $\vec{F}_{3\varphi}$ dargestellt. Des Weiteren ist ein Bezugskoordinatensystem $X'$, $Y'$ eingeführt worden, das ebenfalls mit den Messsensoren rotiert. Es existiert daneben ein globales ortsfestes Koordinatensystem $X, Y$. Zwischen dem ortsfesten Koordinatensystem $X, Y$ und dem mitrotierten Bezugskoordinatensystem $X', Y'$ lässt sich der Rotordrehwinkel $\varphi$ definieren. Das Bezugskoordinatensystem $X', Y'$ fällt in der dargestellten Anordnung der **Fig. 4** gerade mit dem lokalen Messkoordinatensystem $r_l$, $\varphi_l$ des Messsensors 1 zusammen.

In Bezugnahme auf die in **Fig. 4** dargestellten Vektoren wird in **Fig. 5** ein möglicher Ablauf zur Bestimmung der Beschleunigungs- und Fliehkräfte aus den von den Messsensoren 1 bis 3 aufgenommenen Gesamtkräften skizziert. Die einzelnen Kräfte $\vec{F}_1, \vec{F}_2$ und $\vec{F}_3$ der Messsensoren 1 bis 3 enthalten drei Kraftkomponenten, die Fliehkraft, die Drehbeschleunigungskraft und die Gewichtskraft.

In dem in **Fig. 4** dargestellten Fall dreht sich der Rotor sehr langsam, so dass die Gewichtskraft die dominierende Größe darstellt. Ausgehend von den einzelnen Messkoordinatensystemen werden in **Fig. 5** in einem ersten Schritt die einzelnen gemessenen Kräfte $\vec{F}_1, \vec{F}_2$ und $\vec{F}_3$ mit Hilfe der Einheitsvektoren der Messkoordinatensysteme $\vec{F}_{1r}, \vec{F}_{1\varphi}$ ... aufgenommen.

In einem zweiten Schritt werden mit Hilfe einer Koordinatentransformation, die auf der Kenntnis der relativen Lage der einzelnen Messsensoren zueinander beruht, die gemessenen Kraftvektoren im Bezugskoordinatensystem $r_1, \varphi_1$, das mit dem Koordinatensystem $X', Y'$ zusammenfällt, dargestellt. Somit erhält man eine Darstellung der gemessenen Kraftvektoren $\vec{F}_1, \vec{F}_2, \vec{F}_3$ mit Hilfe der Basisvektoren $\vec{F}_{1r}, \vec{F}_{1\varphi}, \vec{F}_{21r}, \vec{F}_{21\varphi}$ und $\vec{F}_{31r}, \vec{F}_{31\varphi}$.

Addiert man in diesem Bezugskoordinatensystem die drei gemessenen Kraftvektoren $\vec{F}_1, \vec{F}_2, \vec{F}_3$ zu einem Gesamtvektor, so heben sich auf Grund der Symmetrie die Beschleunigungs- und Fliehkräfte auf, so dass der Summenvektor gerade den dreifachen Gewichtsvektor $3\,\vec{F}_g$ ergibt. Dies ist in einer dritten Stufe **der Fig. 5** dargestellt. Überlagert man dabei die einzelnen radialen Basisvektoren $\vec{F}_{1r}, \vec{F}_{21r}, \vec{F}_{31r}$, so lässt sich ein Gesamtvektor $\vec{F}_{X'}$ definieren, bzw. aus $\vec{F}_{1\varphi}, \vec{F}_{21\varphi}, \vec{F}_{31\varphi}$ ein Gesamtvektor $\vec{F}_{Y'}$. Der Rotordrehwinkel $\varphi$ beschreibt dabei den Winkel zwischen $\vec{F}_{X'}$ und dem Vektor $3\,\vec{F}_g$ bzw. $\vec{F}_{Y'}$ und $3\,\vec{F}_g$ und lässt sich beispielsweise durch $\arg(\varphi) = |\vec{F}_{Y'}|/|\vec{F}_{X'}|$ berechnen. Ausgehend von der dritten Stufe des in **Fig. 5** dargestellten Verfahrens lässt sich somit Größe und Lage des Gewichtsvektors $\vec{F}_g$ berechnen.

Nun kann dieser Gewichtsvektor $\vec{F}_g$ von den einzelnen ermittelten Kräften $\vec{F}_1, \vec{F}_2, \vec{F}_3$ subtrahiert werden, somit ergeben sich drei resultierende Vektoren $\vec{F}_{res1}, \vec{F}_{res2}$ und $\vec{F}_{res3}$, die jeweils nur den Einfluss der Beschleunigungs- und Fliehkräfte beschreiben. Diese einzelnen resultierenden Vektoren, lassen sich in den einzelnen Messkoordinatensystemen jeweils wieder mit Hilfe der Basisvektoren ausdrücken, dies ist im fünften Schritt der **Fig. 5** dargestellt. Somit erhält man hieraus unmittelbar die Richtung und Größe der Fliehkräfte $\vec{F}_{1rres}, \vec{F}_{2rres}, \vec{F}_{3rres}$ und Beschleunigungskräfte $\vec{F}_{1\varphi res}, \vec{F}_{2\varphi res}$ und $\vec{F}_{3\varphi res}$.

Letztlich sind diese Kräfte im sechsten Schritt der **Fig. 5** noch einmal dargestellt, wobei deren Symmetrie ins Auge fällt. Zur Bestimmung der Qualität der ermittelten Kräfte können diese addiert werden, so dass im Idealfall der Summenvektor gleich Null ist. Ist der Summenvektor ungleich Null, so kann dessen Größe und Lage dazu verwendet werden, systematische Fehler herauszurechnen.

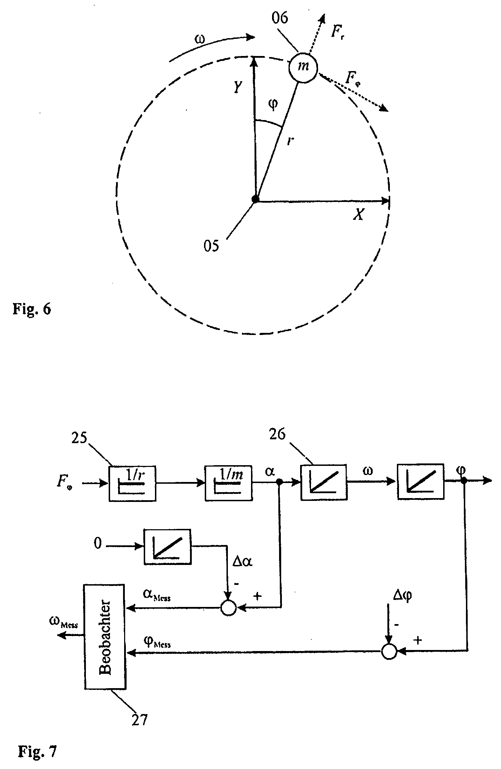

In **Fig. 6** ist in einem weiteren Diagramm Lage und Größe von Fliehkraft $\vec{F}_r$ und Beschleunigungskraft $\vec{F}_\varphi$ dargestellt. Der Messsensor 06 besitzt eine Masse $m$ und weicht vom absoluten Koordinatensystem $X, Y$ um den Rotorwinkel $\varphi$ ab. Dabei rotiert der Messsensor 06 um die Achse der Rotorachse 05. Die Drehzahl lässt sich beispielsweise durch den Betrag $\vec{F}_r$ und Masse und Radius des Messsensors nach der Formel $\omega = \sqrt{\dfrac{|\vec{F}_r|}{m \cdot r}}$ bestimmen. Des Weiteren kann die Drehbeschleunigung durch die Relation $\alpha = \dfrac{|\vec{F}_\varphi|}{m \cdot r}$ berechnet werden.

**Fig. 7** zeigt in einem Blockdiagramm eine mögliche Ausführung zur Berechnung der Drehzahl ausgehend von der ermittelten Drehbeschleunigung $\vec{F}_\varphi$. Die ermittelte Drehbeschleunigung $\vec{F}_\varphi$ wird mittels der P-Glieder 25 durch Radius und Masse dividiert, somit erhält man die Drehbeschleunigung $\alpha$. Mit Hilfe der I-Glieder 26 wird die Drehbeschleunigung $\alpha$ einmal integriert, um die Drehzahl $\omega$ zu berechnen, und nochmals integriert, um den Drehwinkel $\varphi$ zu ermitteln. Auf Grund der Integration ergibt sich eine Drift des Drehwinkels und Drehzahlsignals, die einer Korrektur bedürfen. Diese Korrektur kann beispielsweise durch einen gemessenen Lagewinkel mit Hilfe eines direkt messenden Messsensors durchgeführt werden. Somit kann neben der gemessenen Drehbeschleunigung beispielsweise der aus der gemessenen Gewichtskraft abgeleitete Drehwinkel $\varphi_{Mess}$ als Eingangsgröße für den Beobachter verwendet werden. Das durch einen offenen Integrator beschriebene Störmodell eines Korrekturbeobachters bildet den Beschleunigungsmessfehler $\Delta\alpha$ nach. Diese beiden Größen $\Delta\alpha$ und $\Delta\varphi$ können zur Korrektur innerhalb der Beobachterstruktur 27 als Auswerteeinrichtung berücksichtigt werden um die optimal gemessene Drehzahl $\omega_{Mess}$ zu bestimmen. So lässt sich beispielsweise eine Beobachtergleichung nach folgendem Schema aufstellen:

$$\begin{pmatrix} \varphi(k+1) \\ \omega(k+1) \\ \Delta\alpha(k+1) \end{pmatrix} = \mathbf{A} \cdot \begin{pmatrix} \varphi(k) \\ \omega(k) \\ \Delta\alpha(k) \end{pmatrix} + \mathbf{B} \cdot \begin{pmatrix} \alpha_{Mess}(k) \\ \varphi_{Mess}(k) \end{pmatrix}$$

.

$$\begin{pmatrix} \alpha(k) \\ \omega(k) \end{pmatrix} = \mathbf{C} \cdot \begin{pmatrix} \varphi(k) \\ \omega(k) \\ \Delta\alpha(k) \end{pmatrix} + \mathbf{D} \cdot \begin{pmatrix} \alpha_{Mess}(k) \\ \varphi_{Mess}(k) \end{pmatrix}$$

**Patentansprüche**

1. Vorrichtung zur indirekten Bestimmung dynamischer Größen einer Wind- oder Wasserkraftanlage (01), die eine Rotorwelle (05), mindestens zwei Messsensoren (06), die mittelbar oder unmittelbar an der Rotorwelle (05) angeordnet sind und mit der Rotorwelle (05) rotieren, und eine Recheneinheit (12) umfasst,
   **gekennzeichnet dadurch,**
   **dass** die Messsensoren (06) drehsymmetrisch zur Achse der Rotorwelle (05) angeordnet sind und jeweils mindestens zwei Komponenten einer originären Vektorgröße Kraft und/oder Beschleunigung F in einem mit der Achse der Rotorwelle (05) rotierenden Messkoordinatensystem erfassen, und die Messsensoren (06) zum Austausch von Daten mit der Recheneinheit (12) verbunden sind, wobei die Recheneinheit (12) aus den gemessenen originären Vektorgrößen F mindestens eine der dynamischen Größen Drehbeschleunigung $\alpha$, Drehzahl $\omega$ und Drehwinkel $\varphi$ der Rotorwelle (05) berechnet.

2. Vorrichtung nach Anspruch 1,
   **dadurch gekennzeichnet,**
   **dass** die Messsensoren (06) Beschleunigungssensoren sind.

3. Vorrichtung nach Anspruch 1,
   **dadurch gekennzeichnet,**
   **dass** die Messsensoren (06) Kraftsensoren (11) sind.

4. Vorrichtung nach den Ansprüchen 1 bis 3,
   **dadurch gekennzeichnet,**
   **dass** die Messsensoren (06) in der Rotorwelle (05), insbesondere in der Rotornabe integriert sind.

5. Vorrichtung nach den Ansprüchen 1 bis 3,
   **dadurch gekennzeichnet,**
   **dass** jeder Messsensor (06) in einem Pitch-Regler (13) eines Rotorblatts (04), insbesondere in dem Antriebssystem des Pitch-Reglers (13) integriert ist.

6. Vorrichtung nach den Ansprüchen 1 bis 3,
   **dadurch gekennzeichnet,**
   **dass** jeder Messsensor (06) in einem Rotorblatt (04) integriert ist.

7. Vorrichtung nach Anspruch 6,
   **dadurch gekennzeichnet,**
   **dass** mehrere Messsensoren (06) in einem Rotorblatt (04) in verschiedenen Abständen zur Achse der Rotorwelle (05) integriert sind.

8. Vorrichtung nach einem der vorangegangenen Ansprüche,
   **dadurch gekennzeichnet,**
   **dass** die Messsensoren (06) die Messgrößen drahtlos an die Recheneinheit (12) übermitteln.

9. Vorrichtung nach einem der vorangegangenen Ansprüche,
   **dadurch gekennzeichnet,**
   **dass** die Recheneinheit (12) im rotierenden Teil der Wind- oder Wasserkraftanlage (01), insbesondere in oder an der Rotorwelle (05), insbesondere in oder an der Rotornabe angeordnet ist.

10. Vorrichtung nach Anspruch 9,
    **dadurch gekennzeichnet,**
    **dass** die Recheneinheit (12) in einem Pitch-Regler (13) eines Rotorblatts (04), insbesondere in einem Antriebssystem eines Pitch-Reglers (13) integriert ist.

11. Vorrichtung nach einem der vorangegangenen Ansprüche
    **dadurch gekennzeichnet,**
    **dass** die Recheneinheit (12) mit mindestens einer übergeordneten Steuereinheit (16) der Wind- oder Wasserkraftanlage (01) zum Austausch von Daten verbunden ist.

12. Vorrichtung nach Anspruch 11,
    **dadurch gekennzeichnet,**
    **dass** die übergeordnete Steuereinheit (16) in Abhängigkeit von Daten der Recheneinheit (12) Stellgrößen wie Rotorblatt-Pitch (08), Gondel-Elevation (09) oder Gondel-Azimut (10) steuert.

13. Vorrichtung nach einem der Ansprüche 1 bis 10,
    **dadurch gekennzeichnet,**
    **dass** die Recheneinheit (12) mit mindestens einem Pitch-Regler (13) eines Rotorblatts (04) zum Austausch von Daten verbunden ist.

14. Vorrichtung nach Anspruch 12 oder 13,
    **dadurch gekennzeichnet,**
    **dass** die Recheneinheit (12) drahtlos Daten an die übergeordnete Steuereinheit (16) und/oder den Pitch-Regler (13) übermittelt.

15. Vorrichtung nach einem der vorangegangenen Ansprüche,
    **dadurch gekennzeichnet,**
    **dass** die Vorrichtung mindestens einen weiteren Messsensor (17) umfasst, der mit der Recheneinheit (12) verbunden ist, und der dynamische Größen direkt misst.

**16.** Verfahren zur indirekten Bestimmung dynamischer Größen einer Wind- oder Wasserkraftanlage (01) mit Rotorwelle (05)
**dadurch gekennzeichnet,**
**dass** folgende Verfahrensschritte ausgeführt werden:

- Messung von mindestens zweier Komponenten einer originären Vektorgröße Kraft und/oder Beschleunigung $\overline{F}$ in einem mit der Achse der Rotorwelle (05) rotierenden lokalen Messkoordinatensystem durch jeweils mindestens zwei drehsymmetrisch um die Achse der Rotorwelle (05) angeordnete und mitrotierende Messsensoren (06);
- Übermittlung der Messdaten an eine Recheneinheit (12);
- Berechnung mindestens einer der dynamischen Größen Drehbeschleunigung $\alpha$, Drehzahl $\omega$ und Drehwinkel $\varphi$ der Rotorwelle (05) aus den originären Vektorgrößen $\overline{F}$ durch die Recheneinheit (12).

**17.** Verfahren nach Anspruch 16,
**dadurch gekennzeichnet,**
**dass** die Messung der Vektorgrößen $\overline{F}$ durch mindestens zwei Gruppen symmetrisch angeordneter Messsensoren (06) mit verschiedenen radialen Abständen erfolgt, und die Vektorgrößen $\overline{F}$ jeder Gruppe bei der Berechnung der dynamischen Größen berücksichtigt werden.

**18.** Verfahren nach Anspruch 16 oder 17,
**dadurch gekennzeichnet,**
**dass** die Übermittlung der Messdaten zur Recheneinheit (12) drahtlos erfolgt.

**19.** Verfahren nach einem der Ansprüche 16 bis 18,
**dadurch gekennzeichnet,**
**dass** die Berechnung der dynamischen Größen Messdaten mindestens eines weiteren Messsensors (17) berücksichtigt, wobei der Messsensor (17) die dynamischen Größen direkt misst.

**20.** Verfahren nach einem der Ansprüche 19,
**dadurch gekennzeichnet,**
**dass** die Berechnung die Messdaten des direkt messenden Messsensors (17) zur Korrektur der durch die indirekte Messung ermittelten dynamischen Größen nutzt.

**21.** Verfahren nach einem der Ansprüche 16 bis 20,
**dadurch gekennzeichnet,**
**dass** ein lokales, mit der Rotorachse rotierendes Messkoordinatensystem $(r, \varphi)$ an jedem Messsensor (06) festgelegt wird, wobei jeder Messsensor (06) die originäre Vektorgröße $\overline{F}$ durch Bestimmung mindestens zweier Basiskomponenten $\overline{F}_r$, $\overline{F}_\varphi$ im lokalen Messkoordinatensystem $(r, \varphi)$ erfasst, und ein mit der Rotorachse rotierendes Bezugskoordinatensystem $(X', Y')$ festgelegt wird, wobei die Berechnung der dynamischen Größe aus der originären Vektorgröße $\overline{F}$ folgende Schritte umfasst:

- Darstellung der originären Vektorgröße $\overline{F}$ jedes Messsensors (06) durch mindestens zwei gemessene Basiskomponenten $\overline{F}_r$, $\overline{F}_\varphi$ der Vektorgröße $\overline{F}$ im lokalen mitbewegten Messkoordinatensystem $(r, \varphi)$ des Messsensors (06);
- Transformation der gemessenen Basiskomponenten $\overline{F}_r$, $\overline{F}_\varphi$ der Messkoordinatensysteme in das Bezugskoordinatensystem $(X', Y')$;
- Vektoraddition der gemessenen transformierten Basiskomponenten $\overline{F}_{rX'}$, $\overline{F}_{rY'}$ im Bezugskoordinatensystem $(X', Y')$ zur Ermittlung der Summenvektoren $\overline{F}_{X'}$, $\overline{F}_{Y'}$, die den Gewichtskraftvektor $\overline{F}_g$ bestimmen;
- Berechnung des Resultierendenvektors $\overline{F}_{res}$ durch Subtraktion des Gewichtskraftvektors $\overline{F}_g$ von der gemessen originären Vektorgröße $\overline{F}$ jedes Messsensors (06), $\overline{F}_{res} = \overline{F} - \overline{F}_g$;
- Darstellung des Resultierendenvektors $\overline{F}_{res}$ durch Basiskomponenten $\overline{F}_r$, $\overline{F}_\varphi$ des Messkoordinatensystems $(r, \varphi)$ jedes Messsensors (06);
- Extraktion der Radial- $\overline{F}_{rres}$ und Tangentialkomponenten $\overline{F}_{\varphi res}$ der originären Vektorgröße $\vec{F}$.

**22.** Verfahren nach einem der Ansprüche 16 bis 21,
**dadurch gekennzeichnet,**
**dass** die Berechnung der dynamischen Größen des weiteren die folgende Schritte umfasst:

- Berechnung des Drehwinkels $\varphi$ in Bezug auf das Bezugskoordinatensystem $X'$, $Y'$ durch die Relation: $\varphi = \arg(\vec{F}_{Y'}, \vec{F}_{X'})$;
- Berechnung der Drehzahl und Drehbeschleunigung durch die Vorschrift $\omega = d\varphi/dt$, $\alpha = d\omega/dt$.

**23.** Verfahren nach einem der Ansprüche 16 bis 22,
**dadurch gekennzeichnet,**
**dass** die Berechnung der dynamischen Größen des weiteren die folgende Schritte umfasst:

- Berechnung des Drehzahl $\omega$ in Bezug auf das Bezugskoordinatensystem $(X', Y')$ durch die Relation:

$$\omega = \sqrt{\frac{|\vec{F}_{rres}|}{m \cdot r}} \; ;$$

- Berechnung des Drehwinkels und Drehbeschleunigung durch die Vorschrift φ = ∫ω·d*t*, α=dω)/d*t*.

24. Verfahren nach einem der Ansprüche 16 bis 23, **dadurch gekennzeichnet,** **dass** die Berechnung der dynamischen Größen des weiteren die folgende Schritte umfasst:

- Berechnung der Drehbeschleunigung α in Bezug auf das Bezugskoordinatensystem (*X', Y'*) durch die Relation:

$$\alpha = \frac{|\vec{F}_{qres}|}{m \cdot r};$$

- Berechnung der Drehzahl und des Drehwinkels durch die Vorschrift ω = ∫α·d*t*, φ = ∫ω·d*t*.

25. Verfahren nach einem der Ansprüche 16 bis 24, **dadurch gekennzeichnet,** **dass** die Qualität der ermittelten dynamischen Größen durch den Betrag des Summenvektors der ermittelten Tangential- $\vec{F}_{qres}$ und/oder Radialkomponenten $\vec{F}_{rres}$ beurteilt wird.

26. Verfahren nach einem der Ansprüche 16 bis 25, **dadurch gekennzeichnet,** **dass** die ermittelten dynamischen Größen von der Recheneinheit (12) an eine übergeordnete Steuereinheit (16) übermittelt werden, die auf Basis der dynamischen Größen Stellgrößen wie Rotorblatt-Pitch (08), Gondel-Elevation (09) oder Gondel-Azimut (10) steuert.

27. Verfahren nach einem der Ansprüche 16 bis 25, **dadurch gekennzeichnet,** **dass** die ermittelten dynamischen Größen von der Recheneinheit (12) an einen Pitch-Regler (13) eines Rotorblatts (04) übermittelt werden, der auf Basis der dynamischen Größen den Rotorblatt-Pitch (08) steuert.

28. Verfahren nach einem der Ansprüche 22 bis 24, **dadurch gekennzeichnet,** **dass** die Berechnung die notwendigen mathematischen Operationen, insbesondere Differentiationen und/oder Integrationen mittels eines iterativen numerischen Verfahrens durchführt.

29. Verfahren nach einem der Ansprüche 20 und 28, **dadurch gekennzeichnet,** **dass** im Rahmen des iterativen numerischen Verfahrens die Messgrößen des direkt messenden Messsensors (17) zur Korrektur der durch die indirekte Messung ermittelten dynamischen Größen benutzt werden.

30. Verfahren nach einem der Ansprüche 16 bis 29, **dadurch gekennzeichnet,** **dass** aus den Messdaten der Messsensoren (06) zusätzliche Informationen über einen sekundären dynamischen Zustand der Wind- oder Wasserkraftanlage (01), insbesondere Schwingungsverhalten, Biegeverhalten und ähnliches ermittelt wird.

31. Verfahren nach Anspruch 30, **dadurch gekennzeichnet,** **dass** die Informationen über den sekundären dynamischen Zustand der Wind- oder Wasserkraftanlage (01) zu Steuerungszwecken an eine übergeordnete Steuereinheit (16) oder einen Pitch-Regler (13) übermittelt werden.

## Claims

1. A device for indirectly determining dynamic variables of a wind or water power plant (01), comprising a rotor shaft (05), at least two measuring sensors (06) that are arranged indirectly or directly on the rotor shaft (05) and rotate with the rotor shaft (05), and a computing unit (12), **characterized in that** the measuring sensors (06) are arranged in a rotationally symmetric manner relative to the axis of the rotor shaft (05) and respectively detect at least two components of an original vector quantity force and/or acceleration $\overline{F}$ in a measurement coordinate system rotating with the axis of the rotor shaft (05), and the measuring sensors (06) are connected to the computing unit (12) in order to exchange data, wherein the computing unit (12) calculates at least one of the dynamic variables angular acceleration α, rotational speed ω and angle of rotation φ of the rotor shaft (05) from the measured original vector quantities $\overline{F}$.

2. The device according to claim 1, **characterized in that** the measuring sensors (06) are acceleration sensors.

3. The device according to claim 1, **characterized in that** the measuring sensors (06) are force sensors (11).

4. The device according to claims 1 to 3, **characterized in that** the measuring sensors (06) are integrated into the rotor shaft (05), in particular into the rotor hub.

5. The device according to claims 1 to 3, **characterized in that** each measuring sensor (06) is integrated into a pitch controller (13) of a rotor blade (04), in particular into the drive system of the pitch controller (13).

6. The device according to claims 1 to 3, **characterized in that** each measuring sensor (06) is integrated into a rotor blade (04).

7. The device according to claim 6, **characterized in that** several measuring sensors (06) are integrated into a rotor blade (04) at different distances to the axis of the rotor shaft (05).

8. The device according to one of the preceding claims, **characterized in that** the measuring sensors (06) transmit the measured variables wirelessly to the computing unit (12).

9. The device according to one of the preceding claims, **characterized in that** the computing unit (12) is arranged in the rotating part of the wind or water power plant (01), in particular in or on the rotor shaft (05), in particular in or on the rotor hub.

10. The device according to claim 9, **characterized in that** the computing unit (12) is integrated into a pitch controller (13) of a rotor blade (04), in particular into a drive system of a pitch controller (13).

11. The device according to one of the preceding claims, **characterized in that** the computing unit (12) is connected to at least one higher-level control unit (16) of the wind or water power plant (01) in order to exchange data.

12. The device according to claim 11, **characterized in that** the higher-level control unit (16) controls control variables, such as the rotor blade pitch (08), the nacelle elevation (09) or the nacelle azimuth (10), depending on the data of the computing unit (12).

13. The device according to one of claims 1 to 10, **characterized in that** the computing unit (12) is connected to at least one pitch controller (13) of a rotor blade (04) in order to exchange data.

14. The device according to claim 12 or 13, **characterized in that** the computing unit (12) wirelessly transmits data to the higher-level control unit (16) and/or to the pitch controller (13).

15. The device according to one of the preceding claims, **characterized in that** the device comprises at least one additional measuring sensor (17), which is connected to the computing unit (12) and which measures dynamic variables directly.

16. A method for indirectly determining dynamic variables of a wind or water power plant (01) with a rotor shaft (05) **characterized in that** the following method steps are performed:

- Measurement of at least two components of an original vector quantity force and/or acceleration $\bar{F}$ in a local measurement coordinate system rotating with the axis of the rotor shaft (05) using at least two measuring sensors (06) for each that are arranged in a rotationally symmetric manner about the axis of the rotor shaft (05) and rotate with it;
- Transmission of measured data to a computing unit (12);
- Calculation of at least one of the dynamic variables angular acceleration $\alpha$, rotational speed $\omega$ and angle of rotation $\varphi$ of the rotor shaft (05) from the original vector quantities $\bar{F}$ by the computing unit (12).

17. The method according to claim 16, **characterized in that** the measurement of the vector quantities $\bar{F}$ is carried out by at least two sets of symmetrically arranged measuring sensors (06) with different radial distances, and that the vector quantities F of each set are taken into consideration in the calculation of the dynamic variables.

18. The method according to claim 16 or 17, **characterized in that** the transmission of the measured data to the computing unit (12) is carried out wirelessly.

19. The method according to one of the claims 16 to 18, **characterized in that** the calculation of the dynamic variables takes into account measured data of at least one additional measuring sensor (17), wherein the measuring sensor (17) measures the dynamic variables directly.

20. The method according to one of the claims 19, **characterized in that** the calculation uses the measured data of the directly measuring measuring sensor (17) to correct the dynamic variables determined by indirect measurement.

21. The method according to one of the claims 16 to 20, **characterized in that**

a local measurement coordinate system ($r$, $\varphi$) rotating with the rotor axis is defined at each measuring sensor (06), wherein each measuring sensor (06) detects the original vector quantity $\overline{F}$ by determining at least two basic components $\overline{F}_r$, $\overline{F}\varphi$ in the local measurement coordinate system ($r$, $\varphi$), and a coordinate reference system ($X'$, $Y'$) rotating with the rotor axis is defined, wherein the calculation of the dynamic variable from the original vector quantity $\overline{F}$ comprises the following steps:

- Representation of the original vector quantity $\overline{F}$ of each measuring sensor (06) by means of at least two measured basic components $\overline{F}_r$, $\overline{F}\varphi$ of the vector quantity $\overline{F}$ in the local mobile measurement coordinate system ($r$, $\varphi$) of the measuring sensor (06);
- Transformation of the measured basic components $\overline{F}_r$, $\overline{F}\varphi$ of the measurement coordinate systems into the coordinate reference system ($X'$, $Y'$);
- Vector addition of the measured transformed basic components $\overline{F}_{rX'}$, $\overline{F}_{rY'}$ in the coordinate reference system ($X'$, $Y'$) in order to determine the sum vectors $\overline{F}_{X'}$, $\overline{F}_{Y'}$, which determine the weight force vector $\overline{F}_g$;
- Calculation of the resulting vector $\overline{F}_{res}$ by subtracting the weight force vector $Fg$ from the measured original vector quantity $\overline{F}$ of each measuring sensor (06), $\overline{F}_{res} = \overline{F} - \overline{F}_g$,
- Representation of the resulting vector $\overline{F}_{res}$ by means of the basic components $\overline{F}_r$, $\overline{F}_\varphi$ of the measurement coordinate system ($r$, $\varphi$) of each measuring sensor (06);
- Extraction of the radial $\overline{F}_{rres}$ and tangential components $\overline{F}_{\varphi res}$ of the original vector quantity $\overline{F}$.

22. The method according to one of the claims 16 to 21, **characterized in that** the calculation of the dynamic variables furthermore comprises the following steps:

- Calculation of the angle of rotation $\varphi$ relative to the coordinate reference system $X'$, $Y'$ using the relation: $\varphi=\arg(\overline{F}_{Y'}, \overline{F}_{X'})$;
- Calculation of the rotatioal speed and angular acceleration using the formulas $\omega=d\varphi/dt$, $\alpha=d\omega/dt$.

23. The method according to one of the claims 16 to 22, **characterized in that** the calculation of the dynamic variables furthermore comprises the following steps:

- Calculation of the rotational speed $\omega$ relative

to the coordinate reference system ($X'$, $Y'$) using the relation:

$$\omega = \sqrt{\frac{|\overline{F}_{rres}|}{m \cdot r}} \; ;$$

- Calculation of the angle of rotation and angular acceleration using the formulas $\varphi=\int\omega \cdot dt$, $\alpha=d\omega/dt$.

24. The method according to one of the claims 16 to 23, **characterized in that** the calculation of the dynamic variables furthermore comprises the following steps:

- Calculation of the angular acceleration $\alpha$ relative to the coordinate reference system $(X', Y')$ using the relation:

$$\alpha = \frac{|\overline{F}_{\varphi res}|}{m \cdot r} \; ;$$

- Calculation of the rotational speed and the angle of rotation using the formulas $\omega=\int\alpha \cdot dt$, $\varphi=\int\omega \cdot dt$.

25. The method according to one of the claims 16 to 24, **characterized in that** the quality of the determined dynamic variables is assessed using the magnitude of the sum vector of the determined tangential $\overline{F}_{\varphi res}$ and/or radial components $\overline{F}_{rres}$.

26. The method according to one of the claims 16 to 25, **characterized in that** the determined dynamic variables are transmitted by the computing unit (12) to a higher-level control unit (16), which controls control variables, such as the rotor blade pitch (08), the nacelle elevation (09) or the nacelle azimuth (10), based on the dynamic variables.

27. The method according to one of the claims 16 to 25, **characterized in that** the determined dynamic variables are transmitted by the computing unit (12) to a pitch controller (13) of a rotor blade (04), which controls the rotor blade pitch (08) based on the dynamic variables.

28. The method according to one of the claims 22 to 24, **characterized in that** the calculation performs the necessary mathematical operations, in particular differentiations and/or integrations, using an iterative numerical method.

**29.** The method according to one of the claims 20 to 28, **characterized in that** within the scope of the iterative numerical method, the measured variables of the directly measuring measuring sensor (17) are used to correct the dynamic variables determined by indirect measurement.

**30.** The method according to one of the claims 16 to 29, **characterized in that** from the measured data of the measuring sensors (06), additional information on a secondary dynamic condition of the wind or water power plant (01), in particular vibration behavior, flexural behavior and similar, is determined.

**31.** The method according to claim 30, **characterized in that** the information on the secondary dynamic condition of the wind or water power plant (01) is transmitted to a higher-level control unit (16) or a pitch controller (13) for control purposes.


**Revendications**

**1.** Dispositif pour la mesure indirecte de grandeurs dynamiques d'une installation éolienne ou hydroélectrique (01), qui présente un arbre (05) de rotor, au moins deux capteurs de mesure (06), qui sont disposés directement ou indirectement sur l'arbre (05) du rotor et qui tournent avec l'arbre (05) du rotor, et une unité de calcul (12),
**caractérisé en ce que**
les capteurs de mesure (06) sont disposés selon une symétrie de rotation par rapport à l'axe de l'arbre (05) du rotor et détectent à chaque fois au moins deux composantes d'une grandeur vectorielle originale F force et/ou accélération dans un système de coordonnées de mesure tournant avec l'axe de l'arbre (05) du rotor et les capteurs de mesure (06) sont reliés à l'unité de calcul (12) pour l'échange de données, l'unité de calcul (12) calculant, à partir des grandeurs vectorielles originales $\overline{F}$ au moins une des grandeurs dynamiques accélération de rotation $\alpha$, vitesse de rotation $\omega$ et angle de rotation $\varphi$ de l'arbre (05) du rotor.

**2.** Dispositif selon la revendication 1,
**caractérisé en ce que**
les capteurs de mesure (06) sont des capteurs d'accélération.

**3.** Dispositif selon la revendication 1,
**caractérisé en ce que**
les capteurs de mesure (06) sont des capteurs de force (11).

**4.** Dispositif selon les revendications 1 à 3,
**caractérisé en ce que**
les capteurs de mesure (06) sont intégrés dans l'arbre (05) du rotor, en particulier dans le moyeu du rotor.

**5.** Dispositif selon les revendications 1 à 3,
**caractérisé en ce que**
chaque capteur de mesure (06) est intégré dans un système de régulation (13) du pas de pale d'une pale (04) de rotor, en particulier dans le système d'entraînement du système de régulation (13) du pas de pale.

**6.** Dispositif selon les revendications 1 à 3,
**caractérisé en ce que**
chaque capteur de mesure (06) est intégré dans une pale (04) de rotor.

**7.** Dispositif selon la revendication 6,
**caractérisé en ce que**
plusieurs capteurs de mesure (06) sont intégrés dans une pale (04) de rotor à différentes distances de l'axe de l'arbre (05) du rotor.

**8.** Dispositif selon l'une quelconque des revendications précédentes,
**caractérisé en ce que**
les capteurs de mesure (06) transmettent les grandeurs de mesure sans fil à l'unité de calcul (12).

**9.** Dispositif selon l'une quelconque des revendications précédentes,
**caractérisé en ce que**
l'unité de calcul (12) est disposée dans la partie rotative de l'installation éolienne ou hydroélectrique (01), en particulier dans ou sur l'arbre (05) du rotor, en particulier dans ou sur le moyeu du rotor.

**10.** Dispositif selon la revendication 9,
**caractérisé en ce que**
l'unité de calcul (12) est intégrée dans un système de régulation (13) du pas de pale d'une pale (04) de rotor, en particulier dans un système d'entraînement d'un système de régulation (13) du pas de pale.

**11.** Dispositif selon l'une quelconque des revendications précédentes,
**caractérisé en ce que**
l'unité de calcul (12) est reliée à au moins une unité de commande (16) supérieure de l'installation éolienne ou hydroélectrique (01) pour l'échange de données.

**12.** Dispositif selon la revendication 11,
**caractérisé en ce que**
l'unité de commande (16) supérieure commande, en fonction des données de l'unité de calcul (12), des grandeurs de réglage telles que le pas (08) de pale de rotor, l'élévation (09) de la nacelle ou l'azimut (10) de la nacelle.

**13.** Dispositif selon l'une quelconque des revendications 1 à 10,
    **caractérisé en ce que**
    l'unité de calcul (12) est reliée à au moins un système de régulation (13) de pas de pale d'une pale (04) de rotor pour l'échange de données.

**14.** Dispositif selon la revendication 12 ou 13,
    **caractérisé en ce que**
    l'unité de calcul (12) transmet, sans fil, des données à l'unité de commande (16) supérieure et/ou au système de régulation (13) du pas de pale

**15.** Dispositif selon l'une quelconque des revendications précédentes,
    **caractérisé en ce que**
    le dispositif comprend au moins un autre capteur de mesure (17), qui est relié à l'unité de calcul (12) et qui mesure directement des grandeurs dynamiques.

**16.** Procédé pour la détermination indirecte de grandeurs dynamiques d'une installation éolienne ou hydroélectrique (01) présentant un arbre (05) de rotor,
    **caractérisé en ce que**
    les étapes de procédé suivantes sont réalisées :

    - mesure d'au moins deux composantes d'une grandeur vectorielle originale F force et/ou accélération dans un système de coordonnées de mesure local, tournant avec l'axe de l'arbre (05) du rotor, par à chaque fois au moins deux capteurs de mesure (06) disposés selon une symétrie de rotation autour de l'axe de l'arbre (05) du rotor et tournant avec celui-ci ;
    - transmission des données de mesure à une unité de calcul (12) ;
    - calcul d'au moins une des grandeurs dynamiques accélération de rotation $\alpha$, vitesse de rotation $\omega$ et angle de rotation $\varphi$ de l'arbre (05) du rotor à partir des grandeurs vectorielles originales $\overline{F}$ par l'unité de calcul (12).

**17.** Procédé selon la revendication 16,
    **caractérisé en ce que**
    la mesure des grandeurs vectorielles $\overline{F}$ s'effectue par au moins deux groupes de capteurs de mesure (06) disposés de manière symétrique, à différentes distances radiales, et les grandeurs vectorielles $\overline{F}$ de chaque groupe doivent être prises en considération lors du calcul des grandeurs dynamiques.

**18.** Procédé selon la revendication 16 ou 17,
    **caractérisé en ce que**
    la transmission des données de mesure à l'unité de calcul (12) s'effectue sans fil.

**19.** Procédé selon l'une quelconque des revendications 16 à 18,
    **caractérisé en ce que**
    le calcul des grandeurs dynamiques tient compte de données de mesure d'au moins un autre capteur de mesure (17), le capteur de mesure (17) mesurant directement les grandeurs dynamiques.

**20.** Procédé selon la revendication 19,
    **caractérisé en ce que**
    le calcul utilise les données de mesure du capteur de mesure (17) mesurant directement pour la correction des grandeurs dynamiques déterminées par mesure indirecte.

**21.** Procédé selon l'une quelconque des revendications 16 à 20,
    **caractérisé en ce que**
    un système de coordonnées de mesure ($r$, $\varphi$) local, tournant avec l'axe du rotor est défini au niveau de chaque capteur de mesure (06), chaque capteur de mesure (06) détectant la grandeur vectorielle originale $\overline{F}$ par détermination d'au moins deux composantes de base $\overline{F}_r$, $\overline{F}_\varphi$ dans le système de coordonnées de mesure ($r$, $\varphi$) local et un système de coordonnées de référence ($X'$, $Y'$), tournant avec l'axe du rotor est défini, le calcul de la grandeur dynamique à partir de la grandeur vectorielle originale $\overline{F}$ comprenant les étapes suivantes, consistant à :

    - représenter la grandeur vectorielle originale $\overline{F}$ de chaque capteur de mesure (06) par au moins deux composantes de base mesurées $\overline{F}_r$, $\overline{F}_\varphi$ de la grandeur vectorielle $\overline{F}$ dans le système de coordonnées de mesure ($r$, $\varphi$) local, tournant en même temps, du capteur de mesure (06) ;
    - transformer les composantes de base $\overline{F}_r$, $\overline{F}_\varphi$ mesurées des systèmes de coordonnées de mesure dans le système de coordonnées de référence ($X'$, $Y'$),
    - effectuer l'addition vectorielle des composantes de base $\overline{F}_{rX'}$, $\overline{F}_{rY'}$ mesurées transformées dans le système de coordonnées de référence ($X'$, $Y'$) pour la détermination des vecteurs somme $\overline{F}_X$, $\overline{F}_{Y'}$, qui déterminent le vecteur de la gravité $\overline{F}_g$ ;
    - calculer le vecteur résultant $\overline{F}_{res}$ par soustraction du vecteur de la gravité $\overline{F}_g$ de la grandeur vectorielle originale $\overline{F}$ mesurée de chaque capteur de mesure (06), $\overline{F}_{res} = \overline{F} - \overline{F}_g$,
    - représenter le vecteur résultant $\overline{F}_{res}$ par les composantes de base $\overline{F}_r$, $\overline{F}_\varphi$ du système de coordonnées de mesure ($r$, $\varphi$) de chaque capteur de mesure (06) ;

- extraire les composantes radiales $\overline{F}_{rres}$ et tangentielles $\overline{F}_{\varphi res}$ de la grandeur vectorielle originale $\overline{F}$.

**22.** Procédé selon l'une quelconque des revendications 16 à 21,
**caractérisé en ce que**
le calcul des grandeurs dynamiques comprend en outre les étapes suivantes, consistant à :

- calculer l'angle de rotation $\varphi$ par rapport au système de coordonnées de référence $X'$, $Y'$ par la relation : $\varphi = \arg(\overline{F}_{Y'}, \overline{F}_{X'})$;
- calculer la vitesse de rotation et l'accélération de rotation par la règle $\omega = d\varphi/dt$, $\alpha = d\omega/dt$.

**23.** Procédé selon l'une quelconque des revendications 16 à 22,
**caractérisé en ce que**
le calcul des grandeurs dynamiques comprend en outre les étapes suivantes, consistant à :

- calculer la vitesse de rotation $\omega$ par rapport au système de coordonnées de référence $(X', Y')$ par la relation :

$$\omega = \sqrt{\frac{|\overline{F}_{rres}|}{m \cdot r}} \quad ;$$

- calculer l'angle de rotation et l'accélération de rotation par la règle $\varphi = \int \omega \cdot dt$, $\alpha = d\omega/dt$.

**24.** Procédé selon l'une quelconque des revendications 16 à 23,
**caractérisé en ce que**
le calcul des grandeurs dynamiques comprend en outre les étapes suivantes, consistant à :

- calculer l'accélération de rotation $\alpha$ par rapport au système de coordonnées de référence $(X', Y')$ par la relation :

$$\alpha = \frac{|\vec{F}_{\varphi res}|}{m \cdot r} \quad ;$$

- calculer la vitesse de rotation et l'angle de rotation par la règle $\omega = \int \alpha \cdot dt$, $\varphi = \int \omega \cdot dt$.

**25.** Procédé selon l'une quelconque des revendications 16 à 24,
**caractérisé en ce que**
la qualité des grandeurs dynamiques déterminées est évaluée par le module du vecteur somme de la composante tangentielle $\vec{F}_{\varphi res}$ et/ou de la composante radiale $\vec{F}_{rres}$ déterminées.

**26.** Procédé selon l'une quelconque des revendications 16 à 25,
**caractérisé en ce que**
les grandeurs dynamiques déterminées sont transmises par l'unité de calcul (12) à une unité de commande (16) supérieure, qui commande, sur base des grandeurs dynamiques, des grandeurs de régulation telles que le pas (08) de pale de rotor, l'élévation (09) de la nacelle ou l'azimut (10) de la nacelle.

**27.** Procédé selon l'une quelconque des revendications 16 à 25,
**caractérisé en ce que**
**en ce que** les grandeurs dynamiques déterminées sont transmises par l'unité de calcul (12) à un système de régulation (13) du pas de pale d'une pale (04) de rotor, qui commande le système de régulation (08) du pas de pale sur base des grandeurs dynamiques.

**28.** Procédé selon l'une quelconque des revendications 22 à 24,
**caractérisé en ce que**
le calcul des opérations mathématiques nécessaires, en particulier les différentiations et/ou les intégrations, est réalisé au moyen d'un procédé numérique par itérations.

**29.** Procédé selon l'une quelconque des revendications 20 et 28,
**caractérisé en ce que**
dans le cadre du procédé numérique par itérations, les grandeurs de mesure du capteur de mesure (17) mesurant directement sont utilisées pour la correction des grandeurs dynamiques déterminées par mesure indirecte.

**30.** Procédé selon l'une quelconque des revendications 16 à 29,
**caractérisé en ce que**
**en ce qu'**on détermine, à partir des données de mesure des capteurs de mesure (06), des informations supplémentaires relatives à un état dynamique secondaire de l'installation éolienne ou hydroélectrique (01), en particulier un comportement d'oscillation, de flexion et analogue.

**31.** Procédé selon la revendication 30,
**caractérisé en ce que**
les informations de l'état dynamique secondaire de l'installation éolienne ou hydroélectrique (01) sont transmises à des fins de commande à une unité de commande supérieure (16) ou à un système de régulation (13) du pas de pale.

Fig. 1a

Fig. 1b

Fig. 1c

**Fig. 2**

**Fig. 3a**

**Fig. 3b**

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19739162 A1
- DE 19739164 A1